(19) Europäisches Patentamt
European Patent Office
Office européen des brevets

(11) **EP 3 716 199 B1**

(12) **EUROPEAN PATENT SPECIFICATION**

(45) Date of publication and mention
of the grant of the patent:
**10.01.2024 Bulletin 2024/02**

(21) Application number: **19185002.3**

(22) Date of filing: **08.07.2019**

(51) International Patent Classification (IPC):
**G06T 5/00** *(2006.01)*      **G06T 5/20** *(2006.01)*

(52) Cooperative Patent Classification (CPC):
**G06T 5/002; G06T 5/003; G06T 5/20;** G02B 3/14;
G02B 21/086; G02B 21/241; G02B 21/365;
G06T 2207/10056; G06T 2207/10068;
G06T 2207/30024

(54) **SIGNAL PROCESSING APPARATUS AND METHOD USING LOCAL LENGTH SCALES FOR DEBLURRING**

SIGNALVERARBEITUNGSVORRICHTUNG UND -VERFAHREN MIT VERWENDUNG VON LOCAL-LENGTH-SKALEN ZUR SCHÄRFUNG

APPAREIL DE TRAITEMENT DE SIGNAL ET PROCÉDÉ FAISANT APPEL À DES ÉCHELLES DE LONGUEUR LOCALE POUR LA CORRECTION DE L'IMAGE BROUILLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 PCT/EP2019/058089
29.03.2019 PCT/EP2019/058084**

(43) Date of publication of application:
**30.09.2020 Bulletin 2020/40**

(73) Proprietor: **Leica Microsystems CMS GmbH
35578 Wetzlar (DE)**

(72) Inventors:
• **ZIESCHE, Florian
68165 Mannheim (DE)**
• **WALTER, Kai
69198 Schriesheim (DE)**

(74) Representative: **Grünecker Patent- und Rechtsanwälte
PartG mbB
Leopoldstraße 4
80802 München (DE)**

(56) References cited:
• **MCCLEARY: "Color Component Cross Talk Pixel SNR Correction Method for Color Imagers", SPIE, PO BOX 10 BELLINGHAM WA 98227-0010 USA, 1 January 2007 (2007-01-01), pages 1-12, XP040245062,**
• **RICHARD C PUETTER ET AL: "The Pixon method of image reconstruction", ARXIV.ORG, CORNELL UNIVERSITY LIBRARY, 201 OLIN LIBRARY CORNELL UNIVERSITY ITHACA, NY 14853, 7 January 1999 (1999-01-07), XP080648812,**
• **Sami Koho ET AL: "FOURIER RING CORRELATION SIMPLIFIES IMAGE RESTORATION INFLUORESCENCE MICROSCOPY", bioRxiv, 31 January 2019 (2019-01-31), pages 1-45, XP055708572, DOI: 10.1101/535583 Retrieved from the Internet: URL:https://www.biorxiv.org/content/10.110 1/535583v1.full.pdf**
• **TOONKUM POLLAKRIT ET AL: "Speckle reduction of ultrasound images based on locally regularized Savitzky-Golay filters", 2015 12TH INTERNATIONAL CONFERENCE ON ELECTRICAL ENGINEERING/ELECTRONICS, COMPUTER, TELECOMMUNICATIONS AND INFORMATION TECHNOLOGY (ECTI-CON), IEEE, 24 June 2015 (2015-06-24), pages 1-5, XP033196943, DOI: 10.1109/ECTICON.2015.7206979 [retrieved on 2015-08-17]**

## Description

The invention relates to a signal processing apparatus and method for enhancing a digital input signal.

When a signal is recorded using a recording system, the non-ideal response of the recording system to a point-like source, e.g. if the recording system is an imaging system, as described by its impulse or system response, creates additional noise. This is independent of whether the signal is a time-dependent signal, such as in a radar or sound signal, or a location-dependent signal. It is also independent from the dimensionality of the signal. Noise and artifacts are introduced in one-dimensional signals as well as in two-dimensional signals, such as images, or multi-dimensional signals, such as three-dimensional data, e.g. as in tomography, or in images that have a plurality of color channels. A lot of effort is undertaken to provide apparatuses and methods that remove any such noise and artifacts from the signal. For example, in B. McCleary (2007): Color Component Cross-Talk Pixel SNR Correction Method for Color Imagers, a method is developed to correct channel dependent cross-talk of a Bayer color filter array sensor with signal dependent additive noise. Regularization is applied to each color component, wherein the regularization parameters are determined by maximizing the development of local pixel signal-to-noise ratio estimations. In R. C. Puetter; A. Yahil (1999): The Pixon Method of Image Reconstruction, an image reconstruction method is described, which utilizes a kernel function with a broadness determined inter alia by the overall signal-to-noise ratio of a data footprint.

It is therefore the object of the invention to provide an apparatus and method which is able to reduce the noise in signals, so that the signal quality is improved.

This object is solved by a signal processing apparatus for deblurring a digital input signal, the signal processing apparatus being configured to compute a plurality of local length scales based on at least one of a Fourier Ring Correlation and a local signal-to-noise ratio, wherein for a larger signal-to-noise ratio a smaller length scale is selected than for a smaller signal-to-noise ratio, and to compute each local length scale of the plurality of local length scales at a different location of the digital input signal, each different location comprising at least one sample point of the input signal; to determine a set of different constant local length scales based on the plurality of local length scales, the constant local length scales having the same value at all sample points, to compute a plurality of baseline estimates of the digital input signal, each based on a different constant local length scale of the set of different constant local length scales, wherein each baseline estimate is computed using a polynomial fit or spline fit to the input signal, wherein a least-square minimization criterion, which is to be minimized for the fit, is used for computing each baseline estimate, wherein said different constant local length scale is contained in a penalty term of the least-square minimization criterion, wherein the penalty term comprises a derivative of the respective baseline estimate and to compute a digital output signal based on one of (a) the plurality of baseline estimates and (b) the digital input signal and the plurality of baseline estimates.

Moreover, this object is solved by a signal processing method for deblurring a digital input signal, the signal processing method comprising the following steps: computing a plurality of local length scales based on at least one of a Fourier Ring Correlation and a local signal-to-noise ratio, wherein for a larger signal-to-noise ratio a smaller length scale is selected than for a smaller signal-to-noise ratio, each local length scale of the plurality of length scales being computed at a different location of the digital input signal, each different location comprising at least one sample point of the input signal; determining a set of different constant local length scales based on the plurality of local length scales, the constant local length scales having the same value at all sample points, to compute a plurality of baseline estimates, computing a plurality of baseline estimates of the digital input signal, each based on a different constant local length scale of the set of different constant local length scales, wherein each baseline estimate is computed using a polynomial fit or spline fit to the input signal, wherein a least-square minimization criterion, which is to be minimized for the fit, is used for computing each baseline estimate, wherein said different constant local length scale is contained in a penalty term of the least-square minimization criterion, wherein the penalty term comprises a derivative of the respective baseline estimate and computing a digital output signal based on one of (a) the plurality of baseline estimates and (b) the digital input signal and the plurality of baseline estimates.

The object is further solved by a non-transitory computer readable medium storing a program causing a computer to execute the claimed method; by a computer program with a program code for performing the claimed method, when the computer program runs on a processor; by an output signal being the result of executing the claimed method; and/or by a neural network device trained by input and output signal data, where the output signal data are created from the input signal data by the claimed method. Herein, the neural network is not covered by the subject-matter of the claims.

The noise reduction is improved if the baseline estimate is computed - and subsequently removed - using local length scales that depend on the structure at a specific location. Thus, instead of computing a baseline estimate that reflects the overall baseline of the entire digital input signal, the baseline is adjusted locally to reflect local variations of the input signal.

In most cases, the baseline is a smooth, low-frequency component of the digital input signal which represents the large-scale structure. The component of the digital input signal which is not represented by the baseline contains usually high-frequency, spiky data of small-scale structures. As the baseline is not known, it must be estimated.

As a practical example of a digital input signal, the input signal may contain or consist of one of preferably digital input image data, input sonar, sound and/or ultrasound data, input radar data, input spectroscopy and/or spectral data including cepstra, input microwave data, input vibrational data, such as seismographic data, input tomography data of any kind of tomography and statistical data such as stock exchange data, as well as any combination thereof, all of which may be integer-valued or real-valued or complex-valued arrays of digital data. The input signal may be one of one-dimensional, two-dimensional, three-dimensional and N-dimensional, where $N \geq 1$.

In image data as digital input signal, the baseline may represent a blurred out-of-focus component, whereas the sharp in-focus component is represented by what is not in the baseline. The baseline may also represent other type of noise, which blurs the actual signal. In other application, in which high-frequency noise is contained, the baseline may reflect the actual signal.

Thus, the baseline estimate may be used not only to remove the baseline estimate from the input signal, but to remove a baseline component $I_2(x_i)$ from a content component $I_1(x_i)$. These two components may then be processed and, ultimately, analyzed separately. For example, in spectral data, in particular hyperspectral data, large-scale baseline spectral features may be separated from small-scale spectral features and investigated independently.

The output signal may contain or consist of one of preferably digital output image data, output sonar, sound or ultrasound data, output radar data, output spectroscopy and/or spectral data including cepstra, output microwave data, output vibrational data, such as seismographic data, and statistical data, such as stock exchange data, as well as any combination thereof. The output signal may be real-valued or integer-valued or complex-valued. The output signal data may be one of one-dimensional, two-dimensional, three-dimensional and N-dimensional. The output signal data may be output for further processing.

The term $x_i$ is a shortcut notation for a tuple $\{x_1; \cdots; x_N\}$ containing $N$ position values and representing a discrete position $x_i$ - or the position vector to that position - in the array of a sample point. The position $x_i$ may be represented by a datum or a preferably coherent set of data in the array representing the input signal data. The discrete location $x_i$ denotes e.g. a pair of discrete location variables $\{x_1; x_2\}$ in the case of two-dimensional input signal data and a triplet of discrete location variables $\{x_1; x_2; x_3\}$ in the case of three-dimensional input signal data. In the i-th dimension, the array may contain $M_i$ locations, i.e. $x_i = \{x_{i,1},...,x_{i,M_i}\}$. In total, $I(x_i)$ may contain $(M_1 \times \cdots \times M_N)$ elements. As, in the following, no reference will be made to a concrete location or a concrete dimension, the location is indicated simply by $x_i$. The notation $x_i$ may represent a spatial and/or a time dimension. A combination of time and spatial dimensions may e.g. be present in a series of image time frames.

$I(x_i)$ can be any value or combination of values at the location $x_i$, such as a value representing an intensity of electromagnetic radiation or sound. $I(x_i)$ may represent a color space, e.g. the intensity of the color R in RGB space, or a combined intensity of more than one color, e.g. $\frac{R+G+B}{3}$ in RGB color space. Input signals that have been recorded as input images by a multispectral or hyperspectral camera may contain more than three channels. The same is true for other types of input signals.

Two-dimensional input signals or input images in a three-color RGB format may be regarded as three independent sets of two-dimensional input signal data $I(x_i) = \{I_R(x_i); I_G(x_i); I_B(x_i)\}$, where $I_R(x_i)$ represents a value such as the intensity of the color R, $I_G(x_i)$ represents a value such as the intensity of the color G and $I_B(x_i)$ represents a value such as the intensity of the color B. Alternatively, each color may be considered as constituting a separate input signal and thus separate input signal data. If the input signal data have been recorded as input images using a multispectral camera or a hyperspectral camera, more than three channels may be represented by the input signal data. Each channel may represent a different spectrum or spectral range of the light spectrum. For example, more than three channels may be used to represent the visible-light spectrum. If the imaged object contained fluorescent materials, such as at least one fluorophore or at least one auto-fluorescing substance, each channel may represent a different fluorescent spectrum. For example, if a plurality of fluorescing fluorophores is present in the input signal, each fluorescence spectrum of one fluorophore may be represented by a different channel of the input signal. Moreover, different channels may be used for fluorescence which is selectively triggered by illumination on one hand and auto-fluorescence which may be generated as a by-product or as a secondary effect of the triggered fluorescence on the other. Additional channels may cover the NIR and IR ranges. A channel may not necessarily contain intensity data, but may represent other kind of data related to the image of the object, for example, the phase. In another example, a channel may contain fluorescent lifetime data that are representative of the fluorescence lifetime after triggering at a particular location in the image. In general, the input signal data may thus have the form

$$I(x_i) = \{I_1(x_i); I_2(x_i); ...; I_C(x_i)\},$$

where $C$ is the total number of channels in the input signal data. Preferably, all channels have the same dimensionality.

The above apparatus and method may be further improved by adding one or more of the features that are described in the following. Each of the following features may be added to the method and/or the apparatus independently of the other features. In particular, a person skilled in the art - in knowledge of the inventive apparatus - is capable to configure the inventive method such that the inventive method is capable to operate the inventive apparatus. Accordingly, the skilled person may be capable of configuring the inventive apparatus such that the inventive apparatus is capable of performing the inventive method. Moreover, each feature has its own advantageous technical effect, as is explained hereinafter.

For example, it may be assumed that the content component in the input signal, i.e. the component which should be isolated for further processing, have a high spatial or temporal frequency and e.g. are responsible for changes in the input signal which take place over a short distance or time period. The noise component thus may be assumed to have low frequency, i.e. lead to predominantly gradual intensity changes that extend over larger areas of the input signal. Thus, the noise component is reflected in a baseline of the input signal. The terms "noise" and "content" are used mainly to differentiate between the two components. It is to be noted that in some applications, the "noise" component may actually contain the desired information whereas the "content" component is to be disregarded, e.g. as noise. The baseline estimate may thus be used equally to extract and/or eliminate either small-scale or large-scale (baseline) signal content in the spatial or frequency domain.

Starting from this assumption, the changes across the input signal may be separated additively into a high-frequency content component $I_1(x_i)$ and a low-frequency noise component $I_2(x_i)$ as

$$I(x_i) = I_1(x_i) + I_2(x_i).$$

Due to its low temporal or spatial frequency, the noise component $I_2(x_i)$ can be considered as a more or less smooth baseline on which the content component $I_1(x_i)$ is superimposed as features of high frequency.

In particular for images, the frequencies to be considered for separating the baseline component from the content component may be spatial frequencies. The same deliberations of course apply if, instead of a spatial frequency, a temporal frequency is considered. In this case, the input signal may e.g. represent a spectrum, cepstrum or a plurality of spectra or cepstra.

Once the baseline estimate has been determined and thus a baseline estimate $f(x_i)$ for $I_2(x_i)$ has been obtained, the output signal $O(x_i)$ may be obtained from the baseline estimate and the input signal. In particular, the output signal may be computed by subtracting the baseline estimate from the input signal:

$$O(x_i) = I(x_i) - f(x_i).$$

The output signal $O(x_i)$ is preferably also represented by a discrete digital-data array having dimension $N$ and $M_1 \times \cdots \times M_N$ elements and thus has preferably the same dimensionality as the input signal and/or the baseline estimate. The baseline estimate may also be a hypercube array having $N$ dimensions and $(M_1 \times \cdots \times M_N)$ elements and thus have the same dimensionality as the input signal.

The baseline is estimated using a fit to the input signal. Computationally, the fit, i.e. the baseline estimate, is represented by the discrete baseline estimate $f(x_i)$.

In one embodiment, the apparatus may be configured to compute a baseline estimate using a regularization length scale, e.g. as described further below. For example, the baseline estimate may be computed using a Tikhonov regularization.

The signal processing apparatus may be configured to compute the local length scale at a location in the digital input signal using a Fourier Ring Correlation. A Fourier Ring Correlation which can be used for this computation is e.g. disclosed in Koho, Sami; Tortarolo, Giorgio; Castello, Marco; Deguchi, Takahiro; Diaspro, Alberto; Vicidomini, Giuseppe (2019): Fourier Ring Correlation Simplifies Image Restoration in Fluorescence Microscopy, www.biorxiv.org/content/10,1101/535583v1.

For computing the Fourier Ring Correlation, the signal processing apparatus may be configured to separate the digital input signal into a plurality of locations, each location being e.g. a block of a predetermined size. In the case of a two-dimensional input signal, the locations may e.g. comprise 16x16, 32x32 or 64x64 or generally $2^n \times 2^n$ sample points or a circular area of the two-dimensional input signal. In the case of a N-dimensional input signal, such a location could be a N-dimensional sphere. The locations may be overlapping or non-overlapping. Any shape of block may be used.

If the Fourier Ring Correlation is computed for $K$ blocks, $K$ being an integer, $K$ local length scales $l_k$, $k = 1 ... K$ are obtained, one for each block. This may be expressed as

$$l_k = FRC\big(I_k(x_i)\big) = FRC_k$$

In addition or as an alternative to computing the Fourier Ring Correlation, a local signal-to-noise ratio may be computed, either at each sample point, $SNR(x_i)$, or at a location comprising a plurality of sample points, $SN_k$. For example the signal-to-noise ratio may be computed at each sample point as described in European patent application 18194617.9, which is herewith incorporated in its entirety by reference, or in the PCT application PCT/EP2019/051863, which is herewith incorporated in its entirety by reference.

For a larger signal-to-noise ratio, a smaller length scale is selected than for a smaller signal-to-noise ratio. The signal-to-noise ratios may be mapped to local length scales by mapping the value range of the computed signal-to-noise ratio to a predetermined value range of local length scales. If, for example, a minimum local length scale $L_{min}$ and a maximum local length scale $L_{max}$ are predetermined and the maximum computed signal-to-noise ratio is $SNR_{max}$ and the minimum signal-to-noise ratio is $SNR_{min}$, the local length scale may be computed as

$$l(x_i) = \frac{1}{SNR_{max} - SNR_{min}} [L_{\max}(SNR(x_i) - SNR_{\min}) - L_{min}(SNR(x_i) - SNR_{max})]$$

In the above equation, if the signal-to-noise ratio has only been computed at $K$ locations, $SNR(x_i)$ is to be replaced by $SNR_k$. The maximum and minimum local length scale may be set as explained further below.

The local length scales may be different in the different dimensions, i.e. $l_k = l_{k,j}$ or $l(x_i) = l_j(x_i)$, where the index $j$ indicates the different dimensions.

To avoid that unreasonable results from the computation of the local length scale lead to erroneous regularization results, a range of allowed values for the local length scale or, equivalently, the regularization length scale may be predetermined as $L_{min}$ and $L_{max}$ respectively. For example, it may be predetermined that the local length scale/regularization length scale my not be smaller than half the resolution of the digital input signal as e.g. determined by an impulse response of a recording system. The maximum length scale may be freely determined, e.g. as a multiple of the minimum length scale.

If the local length scale is below the minimum length scale or exceeds the maximum length scale, the range of values of the local length scales or the regularization length scales derived therefrom may be mapped to the range spanned by $L_{min}$ and $L_{max}$.

As an example, the following mapping may be used:

$$l_k := \frac{1}{l_{k,max}^n - l_{k,min}^n} \left[ L_{\max}^n \left( l_k^n - l_{k,\min}^n \right) - L_{min}^n \left( l_k^n - l_{k,max}^n \right) \right],$$

where $n$ is an integer, $n \geq 1$, $l_{k,max}$ is the maximum of all values of $l_k$ and $l_{k,min}$ is the minimum of all values $of\ l_k$.

It is preferred that the mapped values of the local length scale instead of the local length scales directly obtained from the Fourier Ring Correlation or the computation of the local signal-to-noise ratio are used for the interpolation to obtain a local length scale at each sample point,

$$l_k^n \xrightarrow{\text{interpolation}} l^n(x_i).$$

Again, n is any positive integer. Any type of interpolation of the $n^{\text{th}}$ power of the local length scale, such as linear, quadratic, cubic, bicubic, or higher-order, or spline interpolation may be used.

Next, embodiments are described how the baseline estimate may be computed.

The apparatus may be configured to compute the baseline estimate using a least-square minimization criterion. The minimization criterion preferably comprises the baseline estimate and the feature length. In particular, a penalty function of the least-square minimization criterion may comprise a length scale. Preferably, this length scale is set to a local length scale as described above.

In another embodiment, the least-square minimization criterion may comprise a preferably dimensionless combination of the length scale, in particular the local length scale, and at least one derivative of the baseline estimate. The derivative preferably is a derivative or combination of derivatives with respect to at least one dimension $x_i$.

The fit is a polynomial fit to the input signal. In particular, the baseline estimate may be represented by a $K$-order polynomial in any of the $N$ dimensions $i$:

$$f(x_i) = \sum_{k=0}^{K} a_{i,k} x_i^k = a_{i,0} + a_{i,1} x_i^1 + a_{i,2} x_i^2 + \cdots + a_{i,K} x_i^K,$$

where $a_{i,k}$ are the coefficients of the polynomial in the i-th dimension. For each dimension $i = 1,\cdots,N$, a separate polynomial may be computed. According to one embodiment, the polynomial fit may be done simultaneously in a plurality of dimensions, depending on the dimensions of the input signal.

The optimum value for the maximum polynomial order $K$ depends on the required smoothness of the baseline estimate. For a smooth baseline, the polynomial order must be set as low as possible, whereas fitting a highly irregular background may require a higher order.

In the case of a polynomial fit, the baseline estimation data may consist only of the polynomial coefficients $a_{i,k}$. However, a polynomial fit might be difficult to control and not be precise because the only parameter that allows adjustment to the input signal data is the maximum polynomial order. The polynomial order can only take integer values. It might therefore not always be possible to find an optimum baseline estimate. A non-optimum polynomial fit may exhibit local minima in the baseline estimate, which might lead to annoying artifacts.

Therefore, the fit to the input signal data is alternatively a spline fit, in particular a smoothing spline fit. A spline fit usually delivers more reliable results than a polynomial fit because it is simpler to control, e.g. in terms of smoothness, more robust to noise and creates less artifacts. On the other hand, the spline fit is computationally more complex than the polynomial fit.

For computing the baseline estimate, a least-square minimization criterion is used, which is to be minimized for the fit. The exact formulation of the least-square minimization criterion determines the characteristics of the fit and thus of the baseline estimation data. An improper choice of a least-square minimization criterion may cause the baseline estimate to not represent the noise component with sufficient accuracy.

In order to ensure that the baseline estimation data are an accurate representation of the noise or baseline component in the input signal data and to avoid that the baseline estimate is fitted to the content component, the least-square minimization criterion comprises a penalty term. The penalty term is used to penalize an unwanted behavior of the baseline estimate, such as representing components of the input signal data which have high frequency content and therefore are thought to belong to the content component.

According to one embodiment, the least-square minimization criterion $M(f(x_i))$ may have the following form:

$$M(f(x_i)) = C(f(x_i)) + P(f(x_i)),$$

where $C(f(x_i))$ is a cost function and $P(f(x_i))$ is the penalty term. The least-square minimization criterion, the cost function and the penalty term are preferably scalar values.

In one particular instance, the cost function represents the difference between the input signal $I(x_i)$ and the baseline estimate $f(x_i)$. For example, if $\varepsilon(x_i)$ denotes the difference term between the input signal and the baseline estimate as

$$\varepsilon(x_i) = I(x_i) - f(x_i),$$

the cost function $C(f(x_i))$ may comprise the $L_2$-norm $\|\varepsilon(x_i)\|^2$, which is used here as a short hand notation of the sum of the root-mean-square values across all dimensions of the sum of squared differences between the input signal and the baseline estimate in the i-th dimension, i.e.

$$\| \varepsilon(x_i) \|^2 = \sum_{i=1}^{N} \sum_{m=1}^{M_i} \left( I(x_{i,m}) - f(x_{i,m}) \right)^2.$$

The $L_2$-norm $\| \varepsilon(x_i) \|^2$ is a scalar value. An example of a cost function is the following quadratic difference term:

$$C(f(x_i)) = \| \varepsilon(x_i) \|^2$$

For improving the accuracy of the baseline estimate, it may be of advantage if the difference between the input signal and the baseline estimate is truncated, e.g. by using a truncated difference term. A truncated difference term reduces the effects of peaks in the input signal data on the baseline estimation data. Such a reduction is beneficial if the content component is assumed to reside in the peaks of $I(x_i)$. Due to the truncated difference term, peaks in the input signal data that deviate from the baseline estimate more than a predetermined constant threshold value s will be "ignored" in the cost function by truncating their penalty on the fit, in particular the spline fit, to the threshold value. Thus, the baseline estimate will follow such peaks only to a limited amount. The truncated quadratic may be symmetric or asymmetric. The truncated difference term is denoted by $\varphi(\varepsilon(x_i))$ in the following.

In some applications, the content component may be only or at least predominantly contained in the peaks in the input signal, e.g. the bright spots of an image. This may be reflected by choosing a truncated quadratic term which is asymmetric and allows the fit, in particular the spline fit, to follow the valleys but not the peaks in the input signal data. For example, the asymmetric truncated quadratic $\varphi(\varepsilon(x_i))$ may be of the form

$$\varphi\big(\varepsilon(x_i)\big) = \begin{cases} \varepsilon(x_i)^2 & \text{if } \varepsilon(x_i) \leq s \\ s^2 & \text{else} \end{cases}.$$

If, in another particular application, valleys, i.e. dark areas or regions having low values in the input signal, are also to be considered as content components, a symmetric truncated quadratic may be used instead of the asymmetric truncated quadratic. For example, the symmetric truncated quadratic may have the following form:

$$\varphi\big(\varepsilon(x_i)\big) = \begin{cases} \varepsilon(x_i)^2 & \text{if } |\varepsilon(x_i)| \leq s \\ s^2 & \text{else} \end{cases}.$$

Using a truncated quadratic, the cost function $C(f(x_i))$ preferably may be expressed as

$$C(f(x_i)) = \sum_{i=1}^{N} \sum_{m=1}^{M_i} \varphi(x_{i,m})$$

The penalty term $P(f(x_i))$ in the least-square minimization criterion $M(f(x_i))$ may take any form that introduces a penalty if the baseline estimate is fitted to data that are considered to belong to the content component $I_1(x_i)$. A penalty is created in that the penalty term increases in value if the content component in the input signal is represented in the baseline estimate.

If e.g. one assumes that the noise component $I_2(x_i)$ is considered to have low spatial frequency, the penalty term may comprise a term that becomes large if the spatial frequency of the baseline estimate becomes large.

Such a penalty term may be in one embodiment a roughness penalty term which penalizes non-smooth baseline estimation data that deviate from a smooth baseline and thus effectively penalizes the fitting of data having high spatial frequency.

The baseline estimate is computed using a penalty term that comprises a length scale that is representative for the length scale above which a feature in the input signal is considered noise and below which a feature in the input signal is considered content. For example, if the length scale in a digital input image is set to 0.01 mm, all structures in the digital input data smaller than 0.01 mm will be considered content and thus be penalized if contained in the baseline estimate. The length scale may be used as a or to compute a regularization length scale.

Further, the penalty term comprises a derivative of the baseline estimate. A deviation from a smooth baseline may lead to large values in at least one of the first derivative, i.e. the steepness or gradient, and the second derivative, i.e. the curvature, of the baseline estimate. Therefore, the roughness penalty term may contain at least one of a first spatial derivative of the baseline estimate, in particular the square and/or absolute value of the first spatial derivative, and a second derivative of the baseline estimate, in particular the square and/or absolute value of the second spatial derivative. More generally, the penalty term may contain a spatial derivative of any arbitrary order of the baseline estimate, or any linear combination of spatial derivatives of the baseline estimate. Different penalty terms may be used in different dimensions.

In one embodiment, the penalty term $P(f(x_i))$ may comprise at least one partial derivative of the baseline estimate $f(x_i)$ with regard to at least one of its dimensions and a regularization length scale $\lambda_j$ which is a function of the local length scale $l_k$, $l(x_i)$. Different length scales may be used for different dimensions. Thus, $\lambda_j = \lambda(l_{k,j})$ or $\lambda_j = \lambda(l_k(x_i))$. Here, $l_k$ represents a local length scale at a plurality of sample points, such as a block, and $l(x_i)$ a local length scale at each sample point.

For example, the roughness penalty term $P(f(x_i))$ may be formed as

$$P(f(x_i)) = \sum_{j=1}^{N} \lambda_j \sum_{i=1}^{N} \sum_{m=1}^{M_i} \big(\partial_j^2 f(x_{i,m})\big)^2.$$

This roughness penalty term penalizes a large rate of change in the gradient of the baseline estimate or, equivalently, a high curvature, and thus favors smooth estimates. Herein, $\partial_j^2$ is a discrete operator for computing the second derivative in the *j*-th dimension. As the unit of the second derivative is (unit of $x_i$)$^{-2}$, i.e. length$^{-2}$ or time$^{-2}$, the length scale $\lambda_j$ may be set to the fourth power of the local length scale, $\lambda_j = l_j^4$, where $l$ is shorthand for either $l_k$ or $l(x_i)$, so that the resulting penalty term is scalar.

In a penalty term, which is based on the first-order derivative $\partial_j$, such as

$$P(f(x_i)) = \sum_{j=1}^{N} \lambda_j \sum_{i=1}^{N} \sum_{m=1}^{M_i} \left( \partial_j f(x_{i,m}) \right)^2,$$

the length scale $\lambda_j$ used in regularization may be equal to the square of the local length scale, $\lambda_j = l_j^2$, as the first-order derivative is of (unit of $x_i$)$^{-1}$.

For a combination of various derivatives, such as

$$P(f(x_i)) = \sum_{j=1}^{N} \lambda_{1,j} \sum_{i=1}^{N} \sum_{m=1}^{M_i} \left( \partial_j^2 f(x_{i,m}) \right)^2 + \sum_{j=1}^{N} \lambda_{2,j} \sum_{i=1}^{N} \sum_{m=1}^{M_i} \left( \partial_j f(x_{i,m}) \right)^2,$$

each of the regularization length scales is determined from the local length scale in dependence of the respective derivative. In the above example, $\lambda_{1,j} = l_j^2$, and $\lambda_{2,j} = l_j^4$.

In a combined derivative, such as $\partial_i \partial_j f(x_{i,j}), i \neq j$, a corresponding combination of local length scales in the different direction, e.g. $(l_i \cdot l_j)$ for a combined derivative in the *i* and *j* direction, may be used.

The regularization length scale may determine the integer n that is used as an exponent for mapping the local length scales as determined from the Fourier Ring Correlation or the computation of the signal-to-noise ratio and for determining the pointwise local length scale. Preferably, the exponent n corresponds to the exponent of the local length scale in the regularization length scale.

In the discrete, the differentiation may be computed efficiently using a convolution. For example,

$$\partial_j^2 f(x_{i,m}) = D_{i,m}^{(j)} * f(x_{i,m})$$

with a second order derivative matrix

$$D_{i,m}^{(j)} = \begin{cases} 1 \text{ if } m = 1, M_j \text{ and } i = j \\ -2 \text{ if } m = 0 \text{ and } i = j \\ 0 \text{ else} \end{cases}.$$

It is preferred, however, that the roughness penalty term $P(f(x_j))$ is formed as

$$P(f(x_i)) = \sum_{j=1}^{N} \lambda_j \sum_{i=1}^{N} \sum_{m=1}^{M_i} \left( \partial_j f(x_{i,m}) \right)^2.$$

This is a roughness penalty term that penalizes small-scale features and large gradients in the baseline estimate. The sum over j allows to use different penalty terms in different dimensions. It should be noted that, as $x_i$ and $f(x_i)$ are both discrete, the differentiation can be carried out by convolution with a derivative array $\partial_j$. The operator $\partial_j$ represents a discrete first-order derivative or gradient operator in the dimension *j*, which may be represented by an array.

Instead of or in addition to a derivative or a linear combination of derivatives of the baseline estimate, the penalty term may contain a feature-extracting, in particular linear, filter or a linear combination of such filters. Feature-extracting filters may be a Sobel filter, a Laplace filter, and/or a FIR filter, e.g. a high-pass or band-pass spatial filter having a pass-band for high spatial frequencies.

In such general formulation, the penalty term for the *j*-th dimension may contain general operators $\zeta^{(j)}$ and be expressed as

$$P\big(f(x_i)\big) = \sum_{j=1}^{N} \lambda_j \sum_{i=1}^{N} \sum_{m=1}^{M_i} \big[\zeta^{(j)}(f(x_{i,m}))\big]^2.$$

Again, $\lambda_j$ represents the reverse of the units involved in $\zeta^{(j)}$. In particular, the regularization length scale $\lambda_j$ may be a function of the local length scale $I$, $\lambda_j = g(I)$. More specifically, the regularization length scale may be a linear, quadratic or, more generally, polynomial function of the local length scale $I$.

The least-square minimization criterion $M(f(x_i))$ may be minimized using known methods. In one instance, a preferably iterative quadratic or half-quadratic minimization scheme may be used. For performing the minimization, the baseline estimator engine may comprise a minimization engine. The minimization scheme may comprise an iteration mechanism having two iteration stages.

The minimization scheme may e.g. comprise at least part of the LEGEND algorithm, which is computationally efficient. The LEGEND algorithm is described in Idier, J. (2001): Convex Half-Quadratic Criteria and Interacting Variables for Image Restoration, IEEE Transactions on Signal processing, 10(7), p. 1001-1009, and in Mazet, V., Carteret, C., Bire, D, Idier, J., and Humbert, B. (2005): Background Removal from Spectra by Designing and Minimizing a Non-Quadratic Cost Function, Chemometrics and Intelligent Laboratory Systems, 76, p. 121-133. Both articles are herewith incorporated by reference in their entirety.

The LEGEND algorithm introduces discrete auxiliary data $d(x_i)$ that are preferably of the same dimensionality as the input signal data. The auxiliary data are updated at each iteration depending on the latest initial baseline estimation data, the truncated quadratic term and the input signal data.

In the LEGEND algorithm, the least-square minimization criterion containing only a cost function and no penalty term is minimized using two iterative steps until a convergence criterion is met.

A suitable convergence criterion may, for example, be that the sum of the differences between the current baseline estimation data and the previous baseline estimation data across all locations $x_i$ is smaller than a predetermined threshold.

In a further improvement, the convergence criterion may be expressed as

$$\frac{\sum_{i=0}^{N} \sum_{m=0}^{M_i} |f_{(l)}(x_{i,m}) - f_{(l-1)}(x_{i,m})|}{\sum_{i=0}^{N} \sum_{m=0}^{M_i} f_{(l)}(x_{i,m}) + f_{(l-1)}(x_{i,m})} < t,$$

where t is a scalar convergence value which may be set by the user.

As a starting step in the LEGEND algorithm, an initial set of baseline estimation data is defined.

The LEGEND algorithm may be started by selecting a starting set of coefficients $a_k$ for a first baseline estimate

$$f_0(x_i) = \sum_{k=0}^{K} a_{i,k} x_i^k$$ for each of the $i = 1, \cdots, N$ polynomials if a polynomial fit is used.

If a spline fit is used, the initial condition for starting the LEGEND algorithm may be $d(x_i) = 0$, $f(x_i) = I(x_i)$ and the iteration is started by entering at the second iterative step.

In the first iterative step, the auxiliary data may be updated as follows:

$$d_{(l)}(x_i) = \begin{cases} (2\alpha - 1)(I(x_i) - f_{(l-1)}(x_i)) \text{ if } \varepsilon(x_i) \leq s \\ -I(x_i) + f_{(l-1)}(x_i) \text{ else} \end{cases},$$

where $l$ = 1 ... $L$ is the index of the current iteration and $\alpha$ is a constant that may be chosen. Preferably, $\alpha$ is close but not equal to 0.5. A suitable value of $\alpha$ is 0.493. To avoid confusion, the iteration index is put in parentheses.

In a second iterative step, the baseline estimate $f_{(l)}(x_i)$ is updated based on the previously calculated auxiliary data $d_{(l)}(x_i)$, the baseline estimate $f_{(l-1)}(x_i)$ from the previous iteration $l$ - 1 and on the penalty term $P(x_i)$.

The baseline estimate $f_{(l)}(x_i)$ may be minimizing a minimization criterion $M(f(x_i))$ which has been modified for the LEGEND algorithm by including the auxiliary data.

In particular, the updated baseline estimation data may be computed using the following formula in the second iterative LEGEND step:

$$f_{(l)}(x_i) = \underset{f}{\mathrm{argmin}} \left[ \left\| I(x_i) - f_{(l-1)}(x_i) + d_{(l)}(x_i) \right\|^2 + P(f(x_i)) \right]$$

Here, $[\|I(x_i) - f_{(l-1)}(x_i) + d_{(l)}(x_i)\|^2 + P(f(x_i))]$ represents the modified minimization criterion.

The second iterative step may update the baseline estimation data using the following matrix computation:

$$f_{(l)}(x_i) = \left(1 + \sum_{i=1}^{N} \lambda_i A_i^T A_i\right)^{-1} (I(x_i) + d(x_i)))$$

Here ( $1 + \sum_{i=1}^{N} \lambda_i A_i^T A_i$ ) is a $(M_1 \times \cdots \times M_N)^2$ dimensional array. In the two-dimensional case, $A_i$ is a $(M_x - 1)(M_y - 1) \times M_x M_y$ array and given as

$$A_i = \begin{pmatrix} \hat{A} & -\hat{A} & \hat{0} & \cdots & \hat{0} \\ \hat{0} & \hat{A} & -\hat{A} & \ddots & \vdots \\ \vdots & \ddots & \ddots & \ddots & \hat{0} \\ \hat{0} & \cdots & \hat{0} & \hat{A} & -\hat{A} \end{pmatrix}$$

with

$$\hat{A} = \begin{pmatrix} 1 & -1 & 0 & \cdots & 0 \\ 0 & 1 & -1 & \ddots & \vdots \\ \vdots & \ddots & \ddots & \ddots & 0 \\ 0 & \cdots & 0 & 1 & -1 \end{pmatrix}, \quad \hat{0} = \begin{pmatrix} 0 & 0 & 0 & \cdots & 0 \\ 0 & 0 & 0 & \ddots & \vdots \\ \vdots & \ddots & \ddots & \ddots & 0 \\ 0 & \cdots & 0 & 0 & 0 \end{pmatrix} \in \mathbb{R}^{(M_x - 1) \times M_x}$$

The two iteration steps for updating $d_{(l)}(x_i)$ and $f_{(l)}(x_i)$ are repeated until the convergence criterion is met.

According to another aspect, the second step of the LEGEND algorithm is modified using a convolution instead of a matrix computation. This greatly reduces the computational effort.

More particularly, it is preferred that the updated baseline estimate $f_{(l)}(x_i)$ is computed directly by convolving a Green's function with the sum of the input signal and the updated auxiliary data.

According to a more concrete aspect, the second iterative step of the LEGEND algorithm may be replaced by the following iterative step, where the updated baseline estimation data $f_{(l)}(x_i)$ is computed in the l-th iteration using a Green's function $G(x_i)$ as follows

$$f_{(l)}(x_i) = G(x_i) * (I(x_i) + d_{(l)}(x_i)).$$

This step reduces the computational burden significantly as compared to the traditional LEGEND algorithm.

The reduced computational burden results from the fact that according to the above second iterative step, a convolution is computed. This computation can be efficiently carried out using an FFT algorithm. Moreover, the second iterative step may make full use of an array processor, such as a graphics processing unit or an FPGA due to the FFT algorithm. The computational problem is reduced from $(M_x \times M_y)^2$ to $M_x \times M_y$ if the input signal data and all other arrays are two-dimensional. For a general N-dimensional case, the computational burden is reduced from $(M_1 \times \cdots \times M_N)^2$ dimensional matrix calculations to the computation of a FFT with $(M_1 \times \cdots \times M_N)$ -dimensional arrays

Thus, the removal of the baseline estimate may be carried out very quickly, preferably in real time for two-dimensional input signal data. In a $(2/c \times 2k)$ data array a removal of the baseline estimate may be carried out in 50 ms and less.

In one specific embodiment, the Green's function may have the form

$$G(x_{i,m}) = F^{-1}\left[\frac{1}{1 - \sum_{j=1}^{N} \lambda_j F[D_{i,m}^{(j)}]}\right],$$

where $F[\cdots]$ is the discrete N-dimensional Fourier transform, $F^{-1}[\cdots]$ is the inverse discrete N-dimensional Fourier transform, $\lambda_j$ represents the length scale of the roughness penalty term, $D_{i,m}^{(j)}$ is a discrete penalty array in the i-th dimension at location m, and N is the total number of dimensions. The upper index $D^{(j)}$ indicates that there may be a different penalty array for each dimension j.

Preferably, the discrete penalty array $D_i m$ corresponds to the discrete representation of the functional derivative

$\dfrac{\delta P^{(j)}(f(x_i))}{\delta f(x_{i,m})}$ of the penalty term $P^{(j)}(f(x_j))$ that is used for the j-th dimension. As all functions are represented by discrete arrays, the differentiation can be carried out numerically by a convolution

$$D_{i,m}^{(j)} * P^{(j)}\left(x_{i,m}\right),$$

where $D_{i,m}^{(j)}$ is the discrete array for computing the functional derivative $\dfrac{\delta}{\delta f(x_{i,m})}$.

A big advantage of the above Green's function is that any form of penalty term $P(f(x_j))$ may benefit from the fast computation of the second iterative step in the minimization engine. Thus, in the embodiment which uses the Green's function, any penalty term for obtaining a good baseline estimate may be used.

For the general formulation of the penalty term

$$P\left(f(x_i)\right) = \sum_{j=1}^{N} \lambda_j \sum_{i=1}^{N} \sum_{m=1}^{M_i} \left[\zeta^{(j)}(f(x_{i,m}))\right]^2,$$

the array $D_{i,m}^{(j)}$ is defined by

$$D_{i,m}^{(j)} * P(f\left(x_{i,m}\right)) = 0.5 \nabla_f \sum_{j=1}^{N} \lambda_j \sum_{i=1}^{N} \sum_{m=1}^{M_i} \left[\zeta^{(j)}(f(x_{i,m}))\right]^2,$$

where $\zeta^{(j)}$ is a general operator of the penalty term, $*$ denotes the $N$-dimensional convolution and $\nabla_f$ corresponds to the discrete first-order functional derivative in function $f(x_{i,m})$, which may e.g. represent intensity. This equation can be solved by means of the least squares method.

For example, if the penalty term is

$$P(f(x_i)) = \sum_{j=1}^{N} \lambda_j \sum_{i=1}^{N} \sum_{m=1}^{M_i} \left(\partial_j f(x_{i,m})\right)^2,$$

the derivative array in the convolution may be expressed as:

$$D_{i,m}^{(j)} = \begin{cases} 2 & \text{if } m = 0 \text{ and } i = j \\ -1 & \text{if } m = 1 \text{ or } M_i \text{ and } i = j. \\ 0 & \text{else} \end{cases}$$

Next, embodiments are described how the plurality of local length scales $l_k$ as e.g. obtained by a Fourier Ring Correlation can be used to compute an improved baseline estimate or an improved output signal.

Using the local length scale $l(x_i)$ as e.g. obtained from $l_k$ by interpolation, the baseline estimate may be computed directly using the general formulation of the penalty term with a

$$P(f(x_i)) = \sum_{j=1}^{N} \sum_{i=1}^{N} \sum_{m=1}^{M_i} \lambda\left(x_{i,m}\right)\left[\zeta^{(j)}(f(x_{i,m}))\right]^2,$$

where the length scale $\lambda(x_{i,m})$ at the location $x_{i,m}$ is a function of the local length scale $l(x_i)$ and thus of the current sample point, $\lambda = \lambda(l(x_i)) = \lambda(x_i)$, such that the penalty term is scalar, as was explained above. In the following, the baseline estimate obtained using the pointwise local length scale $l(x_i)$ is termed $f(x_i, l(x_i))$ or, shorthand, $f(x_i)$.

For efficiently computing the baseline estimate $f(x_i, l(x_i))$ based on a local length scale, the LEGEND algorithm may be used using any $m^{\text{th}}$ order derivative of the baseline estimate and setting the regularization length scale to the local length scale $\lambda(x_i) = l(x_i)^{2m}$. For example, the second step of the LEGEND algorithm may be reformulated as

$$f_{(l)}(x_i) = \left(1 + \sum_{i=1}^{N} \Lambda \circ A_i^T A_i\right)^{-1} \left(I(x_i) + d_{(l)}(x_i)\right),$$

where ∘ is the Hadamard product and

$$\Lambda = [\lambda(x_i), \lambda(x_i), \dots, \lambda(x_i)] \in \mathbb{R}^{M_x M_y \times M_x M_y}$$

is the regularization matrix, to consider a local length scale $l(x_i)$ at each sample point.

To make use of the faster modification of the baseline estimate, which is based on the Green function, a different approach from using $\lambda(x_i)$ or, equivalently $l(x_i)$ directly in the LEGEND algorithm may be employed.

For example, a baseline estimate may be computed with a constant $\lambda_j$, i.e. a local length scale that is the same at all sample points, but which may be different in each direction j. This computation can then be done repeatedly for each of the different constant local length scales, i.e. the different values of $\lambda_j$. As a result, an array of different baseline estimates $f_n(x_i)$, each based on a different constant local length scale, is obtained. As many different baselines estimates as there are different local length scales would need to be computed. As this is computationally expensive, alternatively, a set of N values for $l$ or, equivalently, $\lambda$ may be computed, where N is smaller than the number of sample points. The set of different baseline estimates is then only computed for the N different constant local length scales. Such a baseline may be expresses as $f_n(x_i, l_n)$ or, shorthand, $f_n(x_i)$. Using this approach, the number of different constant local length scales used may be reduced to 10 or lower.

If the baseline is to be removed from the digital input signal in order to obtain the desired signal content, each of the separate baseline estimates $f_n(x_i)$ may be removed separately from the digital input signal to obtain a plurality of intermediate output signals $J_n(x_i)$:

$$J_n(x_i) = I(x_i) - f_n(x_i), n = 1 \dots N.$$

To obtain an output signal, in which the local length scale is reflected at each sample point, the signal processing apparatus may be configured to interpolate the intermediate output signals at each sample point,

$$J_n(x_i) \xrightarrow{\text{interpolation}} O(x_i).$$

Again, any type of interpolation may be used. Preferably, only those intermediate output signals are used for the interpolation of the output signal at a sample point that are closest to the local regularization length scale that has been computed for this sample point.

Using for example a linear interpolation,

$$O(x_i) = J_{n_2}(x_i) \frac{\lambda_{n_1} - \lambda(x_i)}{\lambda_{n_2} - \lambda_{n_1}} + J_{n_1}(x_i) \frac{\lambda(x_i) - \lambda_{n_2}}{\lambda_{n_2} - \lambda_{n_1}},$$

may be used to compute the output signal from the intermediate output signals to arrive at the output image. Here, $J_{n_1}(x_i)$ represents the intermediate output signal that has been computed using the constant local length scale $\lambda_{n_1}$ in the regularization and $J_{n_2}(x_t)$ represents the intermediate output signal that has been computed using the constant local length scale $\lambda_{n_2}, \lambda_{n_2} > \lambda(x_i) > \lambda_{n_1}$.

As an alternative, a single baseline estimate may be computed from the plurality of baseline estimates based on the constant local length scales by interpolation at each sample point in the same manner as described above for the output image and the intermediate output images. More specifically, a single baseline estimate may be computed from the plurality of baseline estimates by interpolation:

$$f_n(x_i) \xrightarrow{\text{interpolation}} f(x_i).$$

If a linear interpolation is used, the baseline estimate may be computed as:

$$f(x_i) = f_{n_2}(x_i) \frac{\lambda_{n_1} - \lambda(x_i)}{\lambda_{n_2} - \lambda_{n_1}} + f_{n_1}(x_i) \frac{\lambda(x_i) - \lambda_{n_2}}{\lambda_{n_2} - \lambda_{n_1}},$$

Here, $f_{n_1}(x_i)$ represents the baseline estimate that has been computed using the constant local length scale $\lambda_{n_1}$

and $f_{n_2}(x_i)$ represents the baseline estimate that has been computed using the constant local length scale $\lambda_{n_2}$. The output signal may then be computed by removing this baseline estimate from the input signal, e.g. by subtracting, $O(x_i) = I(x_i) - f(x_i)$.

For selecting a reduced set of N local length scales for the regularization from the value range of local length scales, N equally spaced local length scales may be computed. This may e.g. done using linear interpolation, where

$$\lambda_n = \frac{\lambda_{max} - \lambda_{min}}{N-1} n + \lambda_{min}.$$

Instead of using a linear interpolation, the N regularization length scales may be computed to be less spaced apart in a region where a particular length scale occurs more often in the input signal. For example, the N regularization length scales may be computed based on the quantiles.

The apparatus may comprise a storage section. The storage section may be configured to store at least one of the input signal, the output signal, one or more baseline estimates, and the intermediate output signals, at least temporarily.

The apparatus may comprise a signal input section, which may comprise e.g. one or more standard connectors and/or one or more standardized data exchange protocols, such as HDMI, USB, RGB, DVI. The signal input section may be adapted to receive the input signal via the one or more standard connectors and/or one or more data exchange protocols. For example, a storage device and/or a sensor, such as a camera, may be connected to the signal input section.

The apparatus may comprise a signal output section comprising e.g. one or more standard connectors and/or one or more standardized data exchange protocols, such as HDMI, USB, RGB, DVI. The signal output section may be adapted to output the output signal via the one or more standard connectors and/or one or more data exchange protocols. For example, another computer, a network and/or a display may be connected to the signal output section.

The apparatus may further comprise a signal processor, which may be configured to compute the baseline estimate.

The signal processor may comprise a baseline-removal section. The baseline-removal section may be adapted to remove, in particular subtract, a baseline component, e.g. the baseline estimate from the input signal to compute the output signal. In some applications, where the content component is assumed to reside in the low-frequency components of the input signal, the baseline estimate may represent already the content component. In this case, a removal of the baseline estimate from the input signal is not necessary. Rather, the baseline estimate may be output directly for display or further processing.

The signal processor may comprise a baseline estimation engine. The baseline estimation engine is configured to compute the baseline estimate by a fit to at least a subset of the input signal. The baseline estimation engine may comprise a discrete representation of the least-square minimization criterion ($M(x_i)$).

The signal processor, the baseline estimation engine, the baseline-removal section and the minimization engine may each be implemented in hardware, in software or as a combination or hardware and software. For example, at least one of the signal processor, the baseline estimator engine, the baseline-removal section and the minimization engine may be at least partly be implemented by a subroutine, a section of a general-purpose processor, such as a CPU, and/or a dedicated processor such as a CPU, GPU, FPGA, vector processor and/or ASIC.

Although not covered by the subject-matter of the claims, another way of implementing any of the above embodiments of the apparatus and the method is to train an artificial neural network, e. g. a convolutional neural network, using pairs of input signal data and output signal data, where the output signal data have been generated using an embodiment of the above described method. A neural network device which has been trained this way can be regarded as an implementation of the method which has been used to generate the training pairs of input and output signal data.

It is to be noted that the computation and/or removal of the baseline provides best results if the input signal $I(x_i)$ has not been convolved or deconvolved before.

Next, an embodiment is further described by way of example only using a sample embodiment, which is also shown in the drawings. In the drawings, the same reference numerals are used for features which correspond to each other with respect to at least one of function and design.

The combination of features shown in the enclosed embodiment is for explanatory purposes only and can be modified. For example, a feature of the embodiment having a technical effect that is not needed for a specific application may be omitted. Likewise, a feature which is not shown to be part of the embodiment may be added if the technical effect associated with this feature is needed for a particular application.

As is clear from above, any type of image data may be used.

Fig. 1    shows a schematic representation of an embodiment of an apparatus for reducing the noise in an input signal;

Fig. 2    shows a schematic representation of an input signal data, a content component in the input signal, a noise component in the input signal, baseline estimation data and output signal data;

Fig. 3    shows a schematic flowchart of computing a baseline estimate and/or an output signal based on local length scales;

Fig. 4    shows a schematic rendition of a flow chart of computing the baseline removal in an input signal;

Fig. 5    shows detail V of Fig. 4.

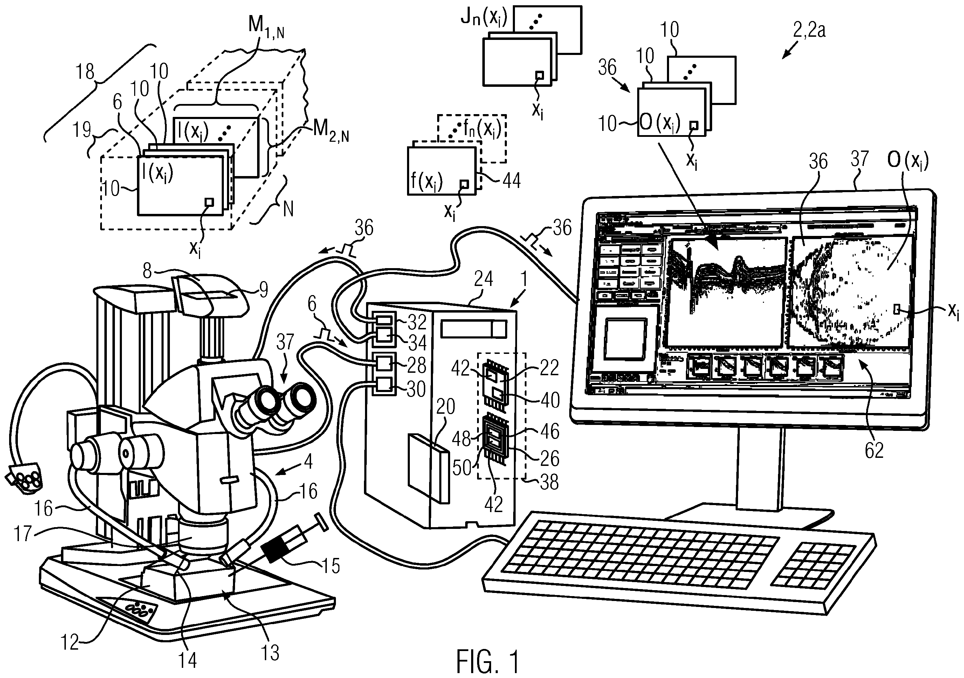

First, the structure and function of a signal processing apparatus 1 are explained with reference to Fig. 1.

The apparatus 1 may be comprised by an observation device 2, in particular a medical or laboratory observation device such as an endoscope or a microscope 2a, or any other device configured to capture high-quality images, such as a device for aerial or astronomical reconnaissance. Just for the purpose of explanation, a microscope 2a is shown as an example of an apparatus 1. For the purpose of the following description of the embodiments, there is no difference between endoscopes or microscopes.

The apparatus 1 may comprise a recording system 4, which is adapted to capture input signal data 6, which in the shown data are in the format of image data. If the recording system 4 is an imaging system, it may be provided e.g. with a camera 8 which is configured to record digital input images, preferably in digital format. The camera may comprise an image sensor 9. The camera 8 may be a CCD, multispectral or hyperspectral camera which records the input signal data 6 in a plurality of channels 10, wherein each channel 10 preferably represents a different light spectrum range, e.g. from the infrared to the ultraviolet. Each channel 10 may be regarded as a separate two-dimensional image or signal. Alternatively, a plurality of channels may together be interpreted as a multi-dimensional array.

The input signal data 6 are also designated as input signal $I(x_i)$ in the following.

Other types of input signal data 6 may of course be recorded with devices or sensors other than a camera or image sensor, e.g. a point detector, a line detector, a photon counter, one or more microphones, vibrational sensors, accelerometers, velocity sensors, antennas, pressure transducers, temperature sensors, capacitive sensors, magnetic sensors, and/or be recorded by radiography, by tomography, by ultrasound and any combination thereof.

In the case of a CCD camera recording in RGB color space, for example, three channels 10, e.g. a R-channel, a G-channel and a B-channel, may be provided to represent a visible light input signal of an object 12. In the case of a multi- or hyperspectral camera, a total of more than three channels 10 may be used in at least one of the visible light range, the IR light range, the NIR light range and the ultraviolet light range.

In case of an imaging system as recording system 4, the object 12 is located in a probe volume 13. The probe volume may be configured to receive the object 12 to be inspected by the apparatus 1. In case of an imaging system as recording system, the probe volume is preferably located in a field of view 14 of the imaging system. The object 12 may comprise animate and/or inanimate matter. The object 12 may further comprise one or more fluorescent materials, such as at least one fluorophore 15.

A multispectral or hyperspectral camera may have a channel 10 for each different fluorescence spectrum of the fluorescent materials in the object 12. For example, each fluorophore 15 may be represented by at least one channel 10 which is matched to the fluorescence spectrum triggered by an illumination system 16. Alternatively or additionally, separate channels 10 may be provided for auto-fluorescence spectra or for spectra of secondary fluorescence, which is triggered by fluorescence excited by the illumination system 16, or for lifetime fluorescence data. Of course, the illumination system 16 may also or solely emit white light or any other composition of light without triggering fluorescence in the object 12.

The microscope 2a may be adapted to excite fluorescence e.g. of fluorophores 15 within an object 12 with light having a suitable fluorescence excitation wavelength by the illumination system 16. The illumination system 16 may be arranged opposite the recording system 4 with respect to the probe volume 13 and/or on the same side as the recording system 4.

If the illumination system 16 is arranged on the same side as the recording system 4, its light may be guided through a lens 17, through which also the input signal $I(x_i)$ is acquired. The illumination system 16 may comprise or consist of one or more flexible light guides to direct light onto the object 12 from one or more different directions. A suitable blocking filter (not shown) may be arranged in the light path in front of the camera 8, e.g. to suppress glare. In case of fluorescence, a blocking filter preferably blocks only the illumination wavelength and allows the fluorescent light of the fluorophores 15 in the object 12 to pass to the camera 8.

If the illumination system is arranged opposite the probe volume 13, its light may pass through the probe volume 13.

The input signal data 6 are a digital representation of a discrete real or integer-valued quantity $I(x_i)$, such as an intensity or a phase, where $x_i$ represents a sample point in the input signal data 6 and I is the quantity at that sample point which constitutes the input signal. The term $x_i$ is a shortcut notation for a tuple $\{x_1; \cdots; x_N\}$ containing $N$, $N \geq 1$, dimensions and representing a discrete location $x_i$ in the discrete input signal data. A sample point $x_i$ may be a pixel a voxel or a preferably coherent set of pixels or voxels in the input signal data, or any other kind of sample point. The

discrete location $x_i$ denotes e.g. a pair of discrete location variables $\{x_1; x_2\}$ in the case of two-dimensional input signal data and a triplet of discrete location variables $\{x_1; x_2; x_3\}$ in the case of three-dimensional input signal data. In the i-th dimension, the array may contain $M_i$ locations, i.e. $x_i = \{x_{i,1}, ..., x_{i,M_i}\}$. In total, $I(x_i)$ may contain $(M_1 \times \cdots \times M_N)$ elements in the case of $N$ dimensions.

The input signal is two-dimensional if e.g. a single channel 10 is contained in a two-dimensional image. The input signal may have a higher dimensionality than two if more than two channels 10 are comprised and/or if the input signal data 6 represent a three-dimensional array, such as a three-dimensional image. The signal may be one-dimensional if it represents e.g. a time trace or a one dimensional spatial measurement.

A three-dimensional input may e.g. be recorded by the observation device 2 by e.g. using light-field technology, z-stacking in microscopes, images obtained by a SCAPE microscope and/or a three-dimensional reconstruction of images obtained by a SPIM microscope. Other sources of a three-dimensional input signal may be tomography images. In the case of a three-dimensional image, each plane of the three-dimensional input signal data 6 may be considered as a two-dimensional input signal 6. Again, each plane may comprise several channels 10.

The recording system may produce a time series 18 of subsequent sets 19 of input signals $I(x_i)$, e.g. each set 19 may be a frame in a video that results from the time series 18.

The apparatus 1 may comprise a storage section 20 which is adapted to contain, at least temporarily, the input signal data 6. The storage section 20 may comprise a volatile or nonvolatile memory, such as a cache memory of a CPU 22 of a computing device 24, such as a general-purpose computer, a PC, and/or of a GPU 26. The storage section 20 may further comprise RAM, a hard disk drive, at least one SSD drive, or an exchangeable storage section, such as a USB stick or an SD card. The storage section 20 may comprise any combination of these types of memory.

For acquiring the input signal data 6, e.g. from the camera 8, a signal input section 28 may be provided. The signal input section 28 may comprise standardized connection means 30, such as standardized data exchange protocols, hardware connectors and/or wireless connections, or any combination thereof. Examples of standardized connectors which may be connected to the camera 8 are HDMI, USB and RJ45 connectors.

The apparatus 1 may further comprise a signal output section, 32 which may comprise standardized connection means 34, such as standardized data exchange protocols, hardware connectors and/or wireless connections, each configured to output output signal data 36 to one or more displays 37. The output signal data 36 have preferably the same dimensionality as the input signal data 6, and are represented by a discrete array of discrete values, forming an output signal $O(x_i)$.

For computing an output signal $O(x_i)$ from the input signal $I(x_i)$, a signal processor 38 may be provided. The signal processor 38 may be at least partly hardware, at least partly software and/or a combination of both hardware and software. For example, the signal processor 38 may comprise at least one of a CPU 22 and a GPU 26 of the computing device 24, as well as sections that have been coded in software and temporarily exist as structural entities in the CPU 22 and/or the GPU 26 as an operational state. The signal processor 38 may also comprise additional hardware such as one or more ASICs and/or FPGAs which have been specifically designed in carrying out operations required for the apparatus and method.

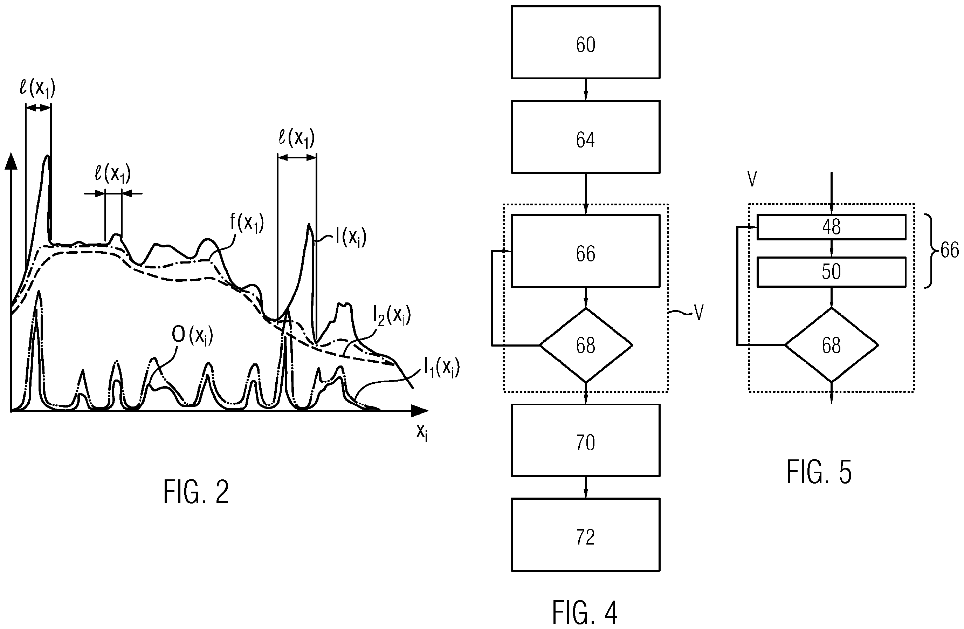

Before continuing the further description of Fig. 1, the general principle of enhancing the input signal $I(x_i)$ by estimating and, if necessary, removing a baseline is explained with reference to Fig. 2. For the removal of the baseline, the signal processor 38 may comprise a baseline-removal section 40.

The input signal $I(x_i)$ is assumed to be composed additively from a component $I_2(x_i)$, which consists of or comprises predominantly components having low spatial frequency. The component $I_2(x_i)$, the "noise" component in the following, thus represents a smooth baseline, about which the component $I_1(x_i)$, the "content" component fluctuates at a higher spatial frequency. The noise component $I_2(x_i)$ is assumed to be smooth and as having large length scales $l(x_i)$; the content component $I_1(x_i)$ is, by contrast, assumed not to be smooth and to contain at least one of peaks and valleys, and to be composed of structures or features having a smaller length scale $l(x_i)$ than the noise component.

Removing, in particular subtracting the noise component, i.e. the baseline, enhances the image contrast and reduces noise, as shown in Fig. 2. In some situations, however, this situation may be reversed and the content of interest may reside in the large-scale structures and the noise in the small-scale structures. In this case, the baseline estimate represents the data of interest.

As neither $I_1(x_i)$ nor $I_2(x_i)$ are known, they have to be estimated. For example, an estimate for the noise component $I_2(x_i)$ may be computed. This estimate is represented by a baseline estimate $f(x_i)$, i.e. data that represent an estimate of the baseline. The baseline estimate $f(x_i)$ is a discrete preferably real-valued array that has preferably the same dimensionality as the input signal $I(x_i)$ and/or the output signal $O(x_i)$. The baseline estimate $f(x_i)$ is composed by baseline estimation data 44 in Fig. 1. The baseline estimate $f(x_i)$ may also be at least temporarily present in storage section 20. Once the baseline estimate has been computed, the output signal, here represented as $O(x_i)$, is obtained by subtracting the baseline estimate $f(x_i)$ from the input signal $I(x_i)$ at each location $x_i$.

According to Fig. 1, the signal processor 38 may comprise a baseline estimator engine 42, which is configured to compute the baseline estimate $f(x_i)$ by a fit to at least a subset of the input signal data 6. Preferably, the fit to at least the subset of the input signal data is a spline fit.

For a computationally efficient spline fit, the baseline estimator engine 42 may comprise a half-quadratic or quadratic minimization engine 46, which may, for example, be a subroutine or a combination of a hard-wired algorithm and software. The minimization engine 46 may be configured to execute a quadratic or half-quadratic minimization scheme and, towards this end, may comprise two iteration stages 48, 50.

Preferably, the minimization engine 46 uses a convolution to compute the baseline estimation data 44 in the second iteration stage 50. As the convolution can be computed more efficiently on an array processor using a FFT, it is preferred that the signal processor 38 includes an array processor such as a GPU 26. In operation, the signal processor comprises the minimization engine 46.

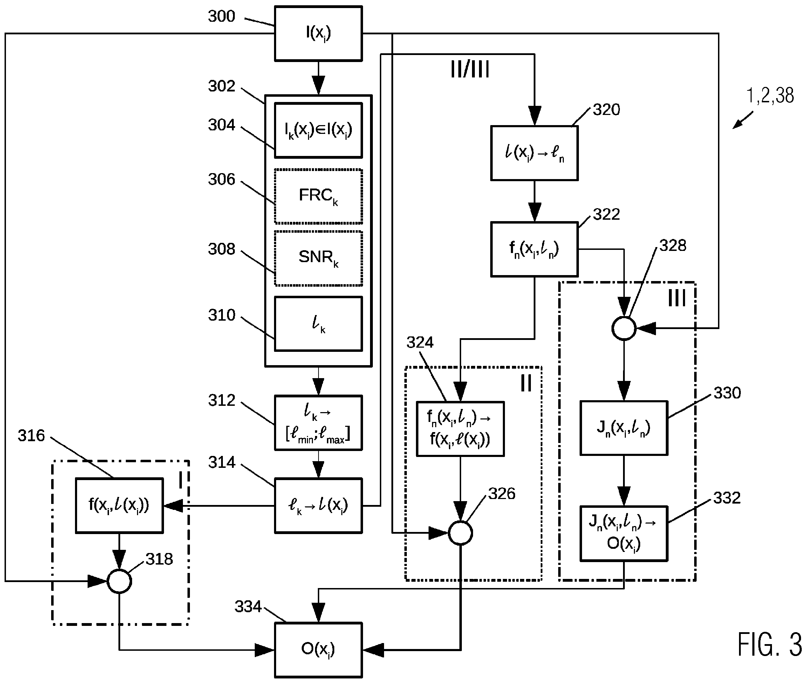

With reference to Fig. 3, the steps of computing the output signal $O(x_i)$ from the input signal $I(x_i)$ are described as they are performed by the apparatus 1. It is to be noted that in the case of an input image as input signal, each channel 10 may be handled separately or all channels may be handled as a single multi-dimensional array.

At a first step 300, the input signal $I(x_i)$ is retrieved, e.g. from the storage section 20 or directly from the camera 8.

Then at step 302, a set of local length scales $l_k$ is computed, where $k = 1 ... K$. For example, the input signal $I(x_i)$ may, in step 304, first be split into $K$ locations, which may be overlapping or non-overlapping. A location may be a single sample point or, preferably, a contiguous subset of neighboring sample points, e.g. a block of sample points. For example, the input signal may be a 4k or UHD image, which is split into 32x32 non-overlapping blocks, each block representing a location $l_k(x_i)$.

Next, using the segmented input signal $l_k(x_i)$, a local length scale $l_k$ is computed for each of the locations $l_k(x_i)$ using at least one of a Fourier Ring Correlation, step 306, and a signal-to-noise ratio, step 308. If both methods are used, a weighted or non-weighted mean value can be used to compute the local length scale.

If only a Fourier Ring Correlation is used, the local length scale is directly obtained as

$$l_k = \mathrm{FRC}_k.$$

At the end of step 302, at step 310, a discrete set of local length scales $l_k$ has been obtained.

The signal-to-noise ratio may be computed as described in European patent application EP 18194617.9.

In order to avoid that unreasonable values of $l_k$ as e.g. computed in steps 306 and/or 308 impair the computation of the baseline estimate, the value range of local length scales as defined by the minimum computed local length scale, $l_{k,min}$, and the maximum computed local length scale $l_{k,max}$ may be mapped to a predetermined value range defined by user-defined values for a predetermined maximum length scale $L_{max}$ and a user-defined value for a predetermined minimum length scale $L_{max}$. For example, the predetermined minimum length scale may be set to half the resolution of the recording system 4. The predetermined maximum length scale may be set to 100-150 % of the maximum length of the structures that are considered to belong to the noise component. This is performed at step 312.

The mapping $l_k \rightarrow [L_{min}; L_{max}]$ may e.g. be computed as

$$l_{k,new}^2 = \frac{1}{l_{k,max}^2 - l_{k,min}^2}\left[L_{max}^2\left(l_k^2 - l_{k,min}^2\right) - L_{min}^2\left(l_k^2 - l_{k,max}^2\right)\right].$$

A similar mapping may be used for mapping the signal-to-noise ratio to the local length scape, namely,

$$l(x_i) = \frac{1}{SNR_{max} - SNR_{min}}\left[L_{max}(SNR(x_i) - SNR_{min}) - L_{min}(SNR(x_i) - SN_{\ max})\right]$$

In the above equation, if the signal-to-noise ratio has only been computed at K locations, $SNR(x_i)$ is to be replaced by $SNR_k$. The maximum and minimum local length scale may be set as explained further below.

Next, at step 314, the local length scale $l(x_i)$ at each sample point $x_i$ is computed from the local length scales $l_k$ at each of the $k$ blocks, resulting in an upsampling of the local length scales. This may be done by e.g. a bicubic or spline interpolation at each sample point $x_i$ of the blockwise local length scales $l_k$.

After the local length scales $l(x_i)$ have been obtained for each sample point $x_i$ the output image $O(x_i)$ may be computed using any of the three embodiments designated as I, II and III in Fig. 3.

According to embodiment I, a single baseline estimate $f(x_i)$ using the local length scales $l(x_i)$, $f(x_i,l(x_i))$ directly is computed at step 316, preferably using the LEGEND algorithm. This baseline estimate is then either used directly as the output signal $O(x_i)$ or removed from the input signal $I(x_i)$ to arrive at the output signal.

As this computation may require considerable resources, alternatives II and III may be computationally more efficient.

In both alternatives II and III, a set of N different local length scales $l_n$ is used and a different baseline estimate $f_n(x_i)$ is used based on each of the different local length scales. In this computation, the local length scale $l_n$ is constant, i.e. not location-dependent. The location-dependency is then re-introduced at a later step as explained further below. Alternatives II and III differ in how the location dependency is introduced.

The set of local length scales $l_n$, $n = 1 \dots N$ is determined at step 320. The set of local length scales in one embodiment can be determined right from the set of K local length scales obtained at step 302, by e.g. randomly choosing $N$ local length scales from the $K$ local length scales. Usually, as less than ten local length scales are preferably needed for computing the different baseline estimates, $K > N$.

Preferably, however, the N local length scales are computed by binning, in particular by interpolation, e.g. by linear interpolation,

$$l_n^2 = \frac{l_{n,max}^2 - l_{n,min}^2}{N-1} n + l_{n,min}^2 \quad,$$

where $l_{n,min}$, $l_{n,max}$ are the minimum and maximum local length scale obtained after step 310 or 312, respectively.

Better results, however are obtained, if the set of local length scales $l_n$ is determined such that the local length scales are spaced more closely together at values that occur frequently. For example, the set may be computed based on a generalized median.

Next, at step 322, $N$ baseline estimates $f_n(x_i)$, n = 1 ... $N$, are computed from the input signal $I(x_i)$. For each of the baseline estimates, the local length scale and thus the regularization length scale is held constant. This allows to use a computationally more efficient modified LEGEND algorithm which uses a convolution in the second iterative step.

In alternative II, a baseline estimate $f(x_i)$ or $f(x_i, l(x_i))$ is computed at step 324 based on the $N$ baseline estimates $f_n(x_i)$ or $f(x_i, l_n)$, for example by interpolation using the local length scale $l(x_i)$ computed at step 314. Using linear interpolation, the baseline estimate may be computed at each sample point as

$$f(x_i) = f_{n_2}(x_i) \frac{l^2(x_i) - l_{n_1}^2}{l_{n_2}^2 - l_{n_1}^2} + f_{n_1}(x_i) \frac{l_{n_2}^2 - l^2(x_i)}{l_{n_2}^2 - l_{n_1}^2},$$

Here, $f_{n_1}(x_i)$ represents the baseline estimate that has been computed using the constant local length scale $l_{n_1}$ and $f_{n_2}(x_i)$ represents the baseline estimate that has been computed using the constant local length scale $l_{n_2}$. The constant local length scales used in this computation are preferably the local length scales of the set of N local length scales that are closest to the local length scale $l(x_i)$ at the current sample point $x_i$.

Once the baseline estimate reflecting the local length scale obtained at each sample point has been obtained, the baseline estimate $f(x_i)$ may be either used directly as the output signal, or the baseline estimate may be removed from the input signal, at step 326.

According to alternative III, each of the baseline estimates $f_n(x_i)$ based on the constant local length scales is removed separately from the input signal $I(x_i)$ at step 328 to obtain a respective intermediate output image $J_n(x_i)$ at step 330. In case the removal is performed by subtraction,

$$J_n(x_i) = I(x_i) - f_n(x_i)$$

is computed for n = 1 ...$N$.

Next, the output image $O(x_i)$ is computed at each sample point $x_i$ from the $N$ intermediate output images, e.g. by interpolation, at step 332. Any interpolation may be used, e.g. a linear interpolation having the form

$$O(x_i) = J_{n_2}(x_i) \frac{l^2(x_i) - l_{n_1}^2}{l_{n_2}^2 - l_{n_1}^2} + J_{n_1}(x_i) \frac{l_{n_2}^2 - l^2(x_i)}{l_{n_2}^2 - l_{n_1}^2}.$$

Here, $J_{n_1}(x_i)$ represents the intermediate output signal that has been computed using the constant local length scale $l_{n_1}$ and $J_{n_2}(x_i)$ represents the intermediate output signal that has been computed using the constant local length scale $l_{n_2}$. For the interpolation, the local length scales $l_{n_1}$, $l_{n\_2}$ are preferably used that are closest to the value of $l(x_i)$ at the current sample point.

Thus, the local length scale at each sample point is reflected in the output signal.

The output signal $O(x_i)$ and the deconvolved output signal $J(x_i)$ may be displayed with or without post-processing on the display 37, step 334.

With reference to Fig. 4 and 5 it is explained, how a baseline estimate $f(x_i)$ or $f_n(x_i)$ may be computed in e.g. each of the steps 316, 322.

In a first step 60, various parameters of the baseline estimator engine 42, which need to be preset, may be defined by a user, e.g. using a graphical user interface 62 (Fig. 1). The parameters may comprise the type of fit to the input signal data 6 that is to be performed by the baseline estimator engine 42. For example, a user may choose between a polynomial fit and a spline fit of the baseline estimation data 44 to the input signal data 6.

Further, the user may choose between a variety of penalty terms $P(f(x_i))$ which are used in the minimization scheme. The penalty term determines the shape of the baseline estimate by penalizing the representation of components of the content component $I_1(x_i)$ in the baseline estimate.

For example, the user may be presented with a selection of various penalty terms that penalize non-smooth characteristics of the baseline estimation data 44. For instance, the penalty term may be a high-pass spatial frequency filter for the baseline estimation data 44, which gets larger if the baseline estimation data 44 contain components having high spatial frequency. Other penalty terms may include a gradient of the baseline estimation data 44. Another example of a penalty term may be the curvature of the baseline estimation data 44. Further, feature extracting filters, such as a Sobel, Laplace and/or FIR band-pass, high-pass or lowpass filter may be selected by the user as penalty term. Further, a linear combination of any of the above may be selected. Different penalty terms may be selected for different dimensions or for different channels of the input signal data 6.

The general representation of the penalty term is as follows

$$P\big(f(x_i)\big) = \sum_{j=1}^{N} \lambda_j \sum_{i=1}^{N} \sum_{m=1}^{M_i} \big[\zeta^{(j)}(f(x_{i,m}))\big]^2,$$

where $\zeta^{(j)}$ is a general operator of the penalty term, which defines the property of the penalty term and $\lambda_j$ is a regularization length scale. The dimension of the regularization length scale is adapted so that the penalty term is scalar. Preferably, the general operator represents a (partial) derivative along one of the input signal's dimensions or a linear combination of such derivatives. The regularization length scale is a function of the local length scale, $I$, $\lambda_j = g(I)$, i.e. represents a local regularization length scale. Preferably, the local length scale is the sole variable on which the regularization length scale depends.

As is clear from the index j of $\lambda_j$, the regularization length scale and thus the length scale may be different in each direction. Of course, there may also be used just one direction-independent feature length.

The user may further select a minimum local length scale $L_{min}$ and/or a maximum local length scale $L_{max}$, which may be different in certain dimensions. These values may be used in step 312. For example, the user may select $L_{min}$ to correspond to the resolution or at half the resolution of the recording system. $L_{max}$ may be determined to correspond to e.g. 150% of the length of the largest small-scale structures in the input signal that represent content.

The user may further select a size of the location or block that is used for segmenting the input signal at step 304. For example, the user may select a 32x32 sample points block size.

The user may also select the number N of constant local length scales, $I_n$, that are used to compute the plurality of baseline estimates $f_n(x_i)$ based on a constant local length scales, cf. step 320.

The user may further select, which of the alternatives is to be used for computing the output signal.

Moreover, the user may select individually, which kind of interpolation is used at each of the steps 316, 322, 330.

In the following, it is assumed that the user selects a gradient-based roughness penalty term based on the gradient of the baseline estimate $f(x_{i,m})$ having the following form

$$P(f(x_i)) = \sum_{j=1}^{N} \lambda_j \sum_{i=1}^{N} \sum_{m=1}^{M_i} \big(\partial_j f(x_{i,m})\big)^2.$$

This penalty term penalizes large gradients in the baseline estimation data. The operator $\partial_j$ represents a first-order derivative or gradient in the dimension j. For this term, the local regularization length scale corresponds to the square of the local length scale, $\lambda_j = I_j(x_i)$. For simplicity's sake it may be assumed that the length scale is not direction-dependent, i.e. $\lambda = I(x_i)$.

When selecting a parameter for the baseline estimator engine, the user may choose between a symmetric and asymmetric quadratic term $\varphi(\varepsilon(x_i))$, which also determines the shape of the baseline estimate by specifying the effect of large peaks on the baseline estimation data.

For example, the user may select the following asymmetric, truncated quadratic:

$$\varphi\big(\varepsilon(x_i)\big) = \begin{cases} (I(x_i) - f(x_i))^2 \text{ if } \varepsilon(x_i) \le s \\ s^2 \text{ else} \end{cases},$$

in which s represents a threshold value which is to be input by the user. The threshold value defines a maximum deviation between the input signal data and the baseline estimation data. Peaks above the baseline estimate do not attract the baseline estimate more than a peak which deviates by the threshold value.

Finally, the user may select a convergence criterion and/or a threshold value t which has to be reached by the convergence criterion.

After the initial parameters for the baseline estimator engine 42 have been set, the data are initialized in step 64 for the iterative minimization scheme 66.

From then on, the iterative minimization scheme 66 is carried out by the minimization engine 46 until a convergence criterion 68 is met. In the embodiment, the following convergence criterion is used:

$$\frac{\sum_{i=0}^{N} \sum_{m=0}^{M_i} |f_{(l)}(x_{i,m}) - f_{(l-1)}(x_{i,m})|}{\sum_{i=0}^{N} \sum_{m=0}^{M_i} f_{(l)}(x_{i,m}) + f_{(l-1)}(x_{i,m})} < t,$$

where $l$ indicates the current iteration and $t$ is a constant scalar threshold value which may be user-specified.

If the convergence criterion 68 is met, it is assumed that the baseline estimation data 44 have been successfully computed.

In Fig. 5, detail V of Fig. 4 is shown to explain the minimization scheme 66 in closer detail. The minimization scheme 66 comprises the first iteration stage 48 and the second iteration stage 50.

In principle, the minimization scheme 66 as carried out by the minimization engine 46 may be the LEGEND algorithm.

If, as in alternative I, the local length scale depends on the actual sample point, $l = l(x_i)$, which leads to a local regularization length scale that also depends on the actual sample point, $\lambda = l^2(x_i) = \lambda(x_i)$, the second step of the LEGEND algorithm is directed to solve the differential equation

$$I(x_i) + d_{(l)}(x_i) - f_{(l)}(x_i) + \sum_{j=1}^{M} \lambda(x_i) \frac{\partial^2 f_{(l)}(x_i)}{\partial x_i^2} = 0,$$

at the $(l)^{th}$ iteration. Once convergence has reached, the LEGEND algorithm in the above formulation directly yields $f(x_i, l(x_i))$.

However, it is preferred to modify the second step of the LEGEND algorithm may be modified to significantly reduce the computational burden. This is used in alternatives II and III, where, in each baseline estimate, the local length scale and thus the local regularization length scale is not a function of the sample point, but constant, although it may depend on the direction.

Under this condition, the second iterative stage 50 is entered after initializing the data at step 64. At this point, the first estimate $f_{(1)}(x_i)$ of the baseline estimation data is computed by using a convolution of the input signal data with a Green's function $G(x_i)$.

$$f_{(1)}(x_i) = G(x_i) * I(x_i)$$

For the gradient-based penalty term used in this embodiment, the Green's function is defined as follows:

$$G\big(x_{i,m}\big) = F^{-1}\left[ \frac{1}{1 - \sum_{j=1}^{N} \lambda_j F[D_{i,m}^{(j)}]} \right],$$

where $F[\cdots]$ is the discrete N-dimensional Fourier transform, $F^{-1}[\cdots]$ is the inverse discrete N-dimensional Fourier transform, $\lambda_j$ is the length scale of the roughness penalty term and

$$D_{i,m}^{(j)} = \begin{cases} 2 \text{ if } m = 0 \text{ and } i = j \\ -1 \text{ if } m = 1 \text{ or } M_i \text{ and } i = j. \\ 0 \text{ else} \end{cases}$$

Then, in the first iteration stage 48, an updated version of auxiliary data $d_{(l)}(x_i)$ may be computed using the current baseline estimation data 44 as follows:

$$d_{(l)}(x_i) = \begin{cases} (2\alpha - 1)(I(x_i) - f_{(l-1)}(x_i)) \text{ if } \varepsilon(x_i) \leq s \\ -I(x_i) + f_{(l-1)}(x_i) \text{ else} \end{cases}.$$

The parameter $\alpha$ is a constant which may have been specified by the user.

Next, in the second iterative stage 50, the updated baseline estimation data 44 are computed using the updated auxiliary data $d_l(x_i)$ of the current iteration $l$ as follows

$$f_{(l)}(x_i) = G(x_i) * \left( I(x_i) + d_{(l)}(x_i) \right)$$

In the next step, it is checked whether the convergence criterion 68 is met. If this is not the case, the minimization scheme 66 proceeds to iterative step 48 using the updated baseline estimation data $f_{(l)}(x_i)$.

Once the baseline estimate has been determined in this way, it can be used as described with reference to Fig. 3

As a general note for the application of the removal of the baseline and the multi-image deconvolution, the dimensionality of the data may be changed by rearranging arrays. For example, two-dimensional data may be rendered as one or more sets of one-dimensional data. This may be achieved by stringing subsequent rows or columns behind one another. Further, three-dimensional data may be reduced to two-dimensional data, by stringing subsequent planes one behind each other. By using this principle recursively, any N-dimensional data may be reduced to one or two-dimensional data to which the scheme described above may be applied.

Vice versa, any one-dimensional array may be arranged as a two or higher dimensional array by simply braking it up in smaller one-dimensional array and index those smaller arrays, which preferably have the same length, in a two or higher dimensional scheme. Further, any type of data may be regarded and displayed as image data or as an image, e.g. by assigning a greyscale intensity to each value of the input signal data and displaying it in a two or three-dimensional arrangement, as described above.

As used herein the term *"and/or"* includes any and all combinations of one or more of the associated listed items and may be abbreviated as "f".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment not covered by the subject-matter of the claims is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment not covered by the subject-matter of the claims comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

**REFERENCE NUMERALS**

| | |
|---|---|
| 1 | apparatus |
| 2 | observation device |
| 2a | microscope |
| 4 | recording system |
| 6 | input signal data $I(x_i)$ |
| 8 | camera |
| 9 | image sensor |
| 10 | channel |
| 12 | object |
| 13 | probe volume |
| 14 | field of view |
| 15 | fluorophore |
| 16 | illumination system |
| 17 | objective |
| 18 | time series of input signals |
| 19 | set of input signals |
| 20 | storage section |
| 22 | CPU |
| 24 | computing device |
| 26 | GPU |
| 28 | signal input section |
| 30 | connection means of signal input section |
| 32 | signal output section |
| 34 | connection means of signal output section |
| 36 | output signal data $O(x_i)$ |
| 37 | display |
| 38 | signal processor |
| 40 | baseline-removal section |
| 42 | baseline estimator engine |
| 44 | baseline estimate $f(x_i)$ |
| 46 | quadratic or half-quadratic minimization engine |

EP 3 716 199 B1

| | |
|---|---|
| 48 | first iteration stage |
| 50 | second iteration stage |
| 60 | setup of baseline estimate parameters |
| 62 | graphical user interface |
| 64 | initializing of minimization engine and/or scheme |
| 66 | quadratic or half-quadratic minimization scheme |
| 68 | convergence criterion |
| 70 | computation of output signal data |
| 300 | retrieving the input signal |
| 302 | computing a set of local length scales |
| 304 | segmenting the input signal |
| 306 | computing the Fourier Ring Correlation |
| 308 | computing a local signal-to-noise ratio |
| 310 | obtaining the local length scales |
| 312 | mapping the value range of the local length scale |
| 314 | upsampling the local length scale |
| 316 | computing the baseline estimate using the upsampled local length scale |
| 318 | computing the output signal |
| 320 | determining a set of local length scales |
| 322 | computing a set of baseline estimates from the set of local length scales |
| 324 | computing a baseline estimate from the set of baseline estimates |
| 326 | obtaining the output signal |
| 328 | removing each of the baseline estimates from the input signal |
| 330 | obtaining a set of intermediate output signals |
| 332 | obtaining the output signal from the set of intermediate output signals |
| 334 | further processing of the output signal |

**Claims**

1. Signal processing apparatus (1) for deblurring a digital input signal $(6, I(x_i))$,

   - the signal processing apparatus being configured
   - to compute a plurality of local length scales $(l_k, I(x_i))$ based on at least one of a Fourier Ring Correlation $(FRC_k)$ and a local signal-to-noise ratio $(SNR_k)$, wherein for a larger signal-to-noise ratio a smaller length scale is selected than for a smaller signal-to-noise ratio, and to compute each local length scale of the plurality of local length scales at a different location $(l_k(x_i))$ of the digital input signal, each different location comprising at least one sample point $(x_i)$ of the input signal;
   - to determine a set of different constant local length scales $(l_n)$ based on the plurality of local length scales $(l_k, I(x_i))$, the constant local length scales $(l_n)$ having the same value at all sample points $(x_i)$;
   - to compute a plurality of baseline estimates $(44, f_n(x_i, l_n))$ of the digital input signal $(6, I(x_i))$ each based on a different constant local length scale of the set of different constant local length scales $(l_n)$, wherein each baseline estimate is computed using a polynomial fit or spline fit to the input signal, wherein a least-square minimization criterion, which is to be minimized for the fit, is used for computing each baseline estimate, wherein said different constant local length scale is contained in a penalty term of the least-square minimization criterion, wherein the penalty term comprises a derivative of the respective baseline estimate; and
   - to compute a digital output signal $(36, O(x_i))$ based on one of (a) the plurality of baseline estimates and (b) the digital input signal and the plurality of baseline estimates.

2. Signal processing apparatus (1) according to claim 1, wherein the signal processing apparatus is further configured

   - to compute each local length scale of the plurality of local length scales $(I(x_i))$ in a location $(l_k(x_i))$ comprising a plurality of sample points $(x_i)$.

3. Signal processing apparatus (1) according to claim 2, wherein the signal processing apparatus is further configured

   - to interpolate the local length scales $(l_k)$ computed at a location $(l_k(x_i))$ that comprises a plurality of sample points $(x_i)$ to compute the local length scales $(I(x_i))$ at each sample point $(x_i)$.

4. Signal processing apparatus (1) according to claim 1, wherein the signal processing apparatus is configured

- to compute a local length scale ($l(x_i)$) at each sample point ($x_i$) of the digital input signal ($6,l(x_i)$), and
- to compute a baseline estimate ($44,f(x_i,l(x_i))$) based on the local length scale ($l(x_i)$) at each sample point ($x_i$) of the digital input signal.

5. Signal processing apparatus (1) according to claim 1 , wherein the signal processing apparatus is configured

- to compute a further baseline estimate ($f(x_i,l(x_i))$) from the plurality of baseline estimates ($f_n(x_i,l_n)$) that are based on the different constant local length scales ($l_n$).

6. Signal processing apparatus (1) according to claim 1, wherein the signal processing apparatus is configured

- to remove each of the plurality of baseline estimates ($f_n(x_i,l_n)$) that are based on the different constant local length scales ($l_n$, ) separately from the digital input signal ($6,l(x_i)$) to obtain a plurality of intermediate output signals ($J_n(x_i)$);
- to obtain the digital output signal ($36, O(x_i)$) based on a combination of the plurality of intermediate output signals.

7. Signal processing apparatus (1) according to claim 6, wherein the signal processing apparatus is configured

- to interpolate at least two intermediate output signals ($J_n(x_i)$) at each sample point ($x_i$) to compute the digital output signal ($36, O(x_i)$) at a matching sample point ($x_i$).

8. Computer implemented signal processing method for deblurring a digital input signal ($6, I(x_i)$),
the signal processing method comprising the following steps:

- computing a plurality of local length scales ($l_k, I(x_i)$) based on at least one of a Fourier Ring Correlation ($FR_k$) and a local signal-to-noise ratio ($SNR_k$), wherein for a larger signal-to-noise ratio a smaller length scale is selected than for a smaller signal-to-noise ratio, each local length scale of the plurality of local length scales being computed at a different location ($l_k(x_i)$) of the digital input signal, each different location comprising at least one sample point ($x_i$) of the input signal;
- determining a set of different constant local length scales ($l_n$) based on the plurality of local length scales ($l_k,I(x_i)$), the constant local length scales ($l_n$) having the same value at all sample points ($x_i$);
- computing a plurality of baseline estimates ($44, f_n(x_i,l_n)$) of the digital input signal ($6, I(x_i)$) each based on a different constant local length scale of the set of different constant local length scales ($l_n$), wherein each baseline estimate is computed using a polynomial fit or spline fit to the input signal, wherein a least-square minimization criterion, which is to be minimized for the fit, is used for computing each baseline estimate, wherein said different constant local length scale is contained in a penalty term of the least-square minimization criterion, wherein the penalty term comprises a derivative of the respective baseline estimate; and
- computing a digital output signal ($36, O(x_i)$) based on one of (a) the plurality of baseline estimates and (b) the digital input signal and the plurality of baseline estimates.

9. Computer program with a program code for performing the signal processing method according to claim 8, when the computer program is run on a processor.

10. Non-transitory computer readable medium storing a computer program causing a computer to execute the signal processing method according to claim 8.

11. Digital output signal ($36, O(x_i)$) being the result of the signal processing method according to claim 8.

**Patentansprüche**

1. Signalverarbeitungsvorrichtung (1) zum Schärfen eines digitalen Eingangssignals *(6, I(x_i))*,

wobei die Signalverarbeitungsvorrichtung ausgebildet ist
zum Berechnen von lokalen Längenmaßstäben *(l_k, I(x_i))* auf der Basis von wenigstens einer Fourier-Ring-Korrelation *(FRC_k)* und einem lokalen Signal/Rausch-Verhältnis ($SNR_k$),wobei für ein größeres Signal/Rausch-Verhältnis ein kleinerer Längenmaßstab ausgewählt wird als für ein kleineres Signal/Rausch-Verhältnis, und zum Berechnen von jedem lokalen Längenmaßstab der Vielzahl von lokalen Längenmaßstäben an einer anderen Stelle $(I_k(x_i))$ des digitalen Eingangssignals, wobei jede andere Stelle wenigstens einen Abtastpunkt $(x_i)$ des Eingangssignals umfasst;

zum Bestimmen einer Menge von verschiedenen konstanten lokalen Längenmaßstäben $(I_n)$ auf Basis der Vielzahl von lokalen Längenmaßstäben $(I_k, I(x_i))$, wobei die konstanten lokalen Längenmaßstäbe $(I_n)$ den gleichen Wert an allen Abtastpunkten $(x_i)$ aufweisen;

zum Berechnen einer Vielzahl von Basislinienschätzungen $(44, f_n(x_i, I_n)$ des digitalen Eingangssignals $(6, I(x_i))$, jeweils auf der Basis eines verschiedenen konstanten lokalen Längenmaßstabs der Menge von verschiedenen konstanten lokalen Längenmaßstäben $(I_n)$, wobei jede Basislinienschätzung unter Verwendung einer Polynomanpassung oder Splineanpassung am Eingangssignal berechnet wird, wobei ein Minimierungskriterium kleinster Quadrate, das für die Anpassung zu minimieren ist, für die Berechnung von jeder Basislinienschätzung verwendet wird, wobei der verschiedene konstante lokale Längenmaßstab in einem Strafterm des Minimierungskriteriums kleinster Quadrate enthalten ist, wobei der Strafterm eine Ableitung der jeweiligen Basislinienschätzung umfasst; und

zum Berechnen eines digitalen Ausgangssignals $(36, O(x_i))$ auf Basis (a) der Vielzahl von Basislinienschätzungen oder (b) des digitalen Eingangssignals und der Vielzahl von Basislinienschätzungen.

2. Signalverarbeitungsvorrichtung (1) nach Anspruch 1, wobei die Signalverarbeitungsvorrichtung ferner ausgebildet ist zum Berechnen von jedem lokalen Längenmaßstab der Vielzahl von lokalen Längenmaßstäben $(I(x_i))$ an einer Stelle $(I_k(x_i))$, umfassend eine Vielzahl von Abtastpunkten $(x_i)$.

3. Signalverarbeitungsvorrichtung (1) nach Anspruch 2, wobei die Signalverarbeitungsvorrichtung ferner ausgebildet ist zum Interpolieren der lokalen Längenmaßstäbe $(I_k)$, berechnet an einer Stelle $(I_k(x_i))$, der eine Vielzahl von Abtastpunkten $(x_i)$ zum Berechnen der lokalen Längenmaßstäbe $(I(x_i))$ an jedem Abtastpunkt $(x_i)$ umfasst.

4. Signalverarbeitungsvorrichtung (1) nach Anspruch 1, wobei die Signalverarbeitungsvorrichtung ausgebildet ist

zum Berechnen eines lokalen Längenmaßstabs $(I(x_i))$ an jedem Abtastpunkt $(x_i)$ des digitalen Eingangssignals $(6, I(x_i))$, und
zum Berechnen einer Basislinienschätzung $(44, f(x_i, I(x_i)))$ auf Basis des lokalen Längenmaßstabs $(I(x_i))$ an jedem Abtastpunkt $(x_i)$ des digitalen Eingangssignals.

5. Signalverarbeitungsvorrichtung (1) nach Anspruch 1, wobei die Signalverarbeitungsvorrichtung ausgebildet ist zum Berechnen einer weiteren Basislinienschätzung $(f(x_i, I(x_i)))$ aus der Vielzahl von Basislinienschätzungen $(f_n(x_i, I_n))$, die auf den verschiedenen konstanten lokalen Längenmaßstäben $(I_n)$ basieren.

6. Signalverarbeitungsvorrichtung (1) nach Anspruch 1, wobei die Signalverarbeitungsvorrichtung ausgebildet ist

zum Entfernen von jeder der Vielzahl von Basislinienschätzungen $(f_n(x_i, I_n))$, die auf den verschiedenen konstanten lokalen Längenmaßstäben $(f_n)$ getrennt vom digitalen Eingangssignal $(6, I(x_i))$ basieren, um eine Vielzahl von Zwischenausgangssignalen $(J_n(x_i))$ zu erhalten;
zum Ermitteln des digitalen Ausgangssignals $(36, O(x_i))$ auf Basis einer Kombination der Vielzahl von Zwischenausgangssignalen.

7. Signalverarbeitungsvorrichtung (1) nach Anspruch 6, wobei die Signalverarbeitungsvorrichtung ausgebildet ist zum Interpolieren von wenigstens zwei Zwischenausgangssignalen $(J_n(x_i))$ an jedem Abtastpunkt $(x_i)$ zum Berechnen des digitalen Ausgangssignals $(36, O(x_i))$ an einem passenden Abtastpunkt $(x_i)$.

8. Computerimplementiertes Signalverarbeitungsverfahren zum Schärfen eines digitalen Eingangssignals, wobei das Signalverarbeitungsverfahren die folgenden Schritte umfasst:

Berechnen einer Vielzahl von lokalen Längenmaßstäben $(I_k, I(x_i))$ auf der Basis von wenigstens einer Fourier-Ring-Korrelation $(FR_k)$ und einem lokalen Signal/Rausch-Verhältnis $(SNR_k)$, wobei für ein größeres Signal/Rausch-Verhältnis ein kleinerer Längenmaßstab ausgewählt wird als für ein kleineres Signal/Rausch-Verhältnis, wobei jeder lokale Längenmaßstab der Vielzahl von lokalen Längenmaßstäben an einer anderen Stelle $(I_k(x_i))$ des digitalen Eingangssignals berechnet wird, wobei jede andere Stelle wenigstens einen Abtastpunkt $(x_i)$ des Eingangssignals umfasst;

Bestimmen einer Menge von verschiedenen konstanten lokalen Längenmaßstaben ($I_n$) auf Basis der Vielzahl von lokalen Längenmaßstäben ($I_k$, $I(x_i)$), wobei die konstanten lokalen Längenmaßstäbe ($I_n$) den gleichen Wert an allen Abtastpunkten ($x_i$) aufweisen;

Berechnen einer Vielzahl von Basislinienschätzungen ($44$, $f_n(x_i, I_n)$) des digitalen Eingangssignals ($6$, $I(x_i)$), jeweils auf der Basis eines verschiedenen konstanten lokalen Längenmaßstabs der Menge von verschiedenen konstanten lokalen Längenmaßstäben ($I_n$), wobei jede Basislinienschätzung unter Verwendung einer Polynomanpassung oder Splineanpassung am Eingangssignal berechnet wird, wobei ein Minimierungskriterium kleinster Quadrate, das für die Anpassung zu minimieren ist, für die Berechnung von jeder Basislinienschätzung verwendet wird, wobei der verschiedene konstante lokale Längenmaßstab in einem Strafterm des Minimierungskriteriums kleinster Quadrate enthalten ist, wobei der Strafterm eine Ableitung der jeweiligen Basislinienschätzung umfasst; und

Berechnen eines digitalen Ausgangssignals ($36$, $O(x_i)$) auf Basis (a) der Vielzahl von Basislinienschätzungen oder (b) des digitalen Eingangssignals und der Vielzahl von Basislinienschätzungen.

9. Computerprogramm mit einem Programmcode zum Ausführen des Signalverarbeitungsverfahrens nach Anspruch 8, wenn das Computerprogramm auf einem Prozessor ausgeführt wird.

10. Nichtflüchtiges computerlesbares Medium zum Speichern eines Computerprogramms zum Veranlassen eines Computers zum Ausführen des Signalverarbeitungsverfahrens nach Anspruch 8.

11. Digitales Ausgangssignal ($36$, $O(x_i)$), welches das Ergebnis des Signalverarbeitungsverfahrens nach Anspruch 8 ist.

**Revendications**

1. Appareil de traitement de signal (1) pour déflouter un signal d'entrée numérique ($6$, $I(x_i)$), l'appareil de traitement de signal étant configuré

   - pour calculer une pluralité d'échelles de longueur locales ($I_k$, $I(x_i)$) sur la base d'au moins un paramètre parmi une corrélation d'anneau de Fourier ($FRC_k$) et un rapport signal sur bruit local ($SNR_k$), dans lequel, pour un rapport signal sur bruit plus grand, une échelle de longueur plus petite est sélectionnée que pour un rapport signal sur bruit plus petit, et pour calculer chaque échelle de longueur locale de la pluralité d'échelles de longueur locales à un emplacement différent ($I_k(x_i)$) du signal d'entrée numérique, chaque emplacement différent comprenant au moins un point d'échantillonnage ($x_i$) du signal d'entrée ;
   - pour déterminer un ensemble d'échelles de longueur locales constantes différentes ($I_n$) sur la base de la pluralité d'échelles de longueur locales ($I_k$, $I(x_i)$), les échelles de longueur locales constantes ($I_n$) ayant la même valeur à tous les points d'échantillonnage ($x_i$) ;
   - pour calculer une pluralité d'estimations de ligne de base ($44$, $f_n(x_i, I_n)$) du signal d'entrée numérique ($6$, $I(x_i)$), sur la base chacune d'une échelle de longueur locale constante différente de l'ensemble de différentes échelles de longueur locales constantes ($I_n$), dans lequel chaque estimation de ligne de base est calculée à l'aide d'un ajustement polynomial ou d'un ajustement par spline sur le signal d'entrée, dans lequel un critère de minimisation par les moindres carrés, qui doit être minimisé pour l'ajustement, est utilisé pour calculer chaque estimation de ligne de base, dans lequel ladite échelle de longueur locale constante différente est contenue dans un terme de pénalité du critère de minimisation par les moindres carrés, dans lequel le terme de pénalité comprend une dérivée de l'estimation de ligne de base respective ; et
   - pour calculer un signal de sortie numérique ($36$, $0(x_i)$) sur la base soit (a) de la pluralité d'estimations de ligne de base, soit (b) du signal d'entrée numérique et de la pluralité d'estimations de ligne de base.

2. Appareil de traitement de signal (1) selon la revendication 1, dans lequel l'appareil de traitement de signal est en outre configuré

   - pour calculer chaque échelle de longueur locale de la pluralité d'échelles de longueur locales ($I(x_i)$) dans un emplacement ($I_k(x_i)$) comprenant une pluralité de points d'échantillonnage ($x_i$).

3. Appareil de traitement de signal (1) selon la revendication 2, dans lequel l'appareil de traitement de signal est en outre configuré

   - pour interpoler les échelles de longueur locales ($I_k$) calculées à un emplacement ($I_k(x_i)$) qui comprend une

pluralité de points d'échantillon $(x_i)$ pour calculer les échelles de longueur locales $(l_K(x_i)$ à chaque point d'échantillon $(x_i)$.

4. Appareil de traitement de signal (1) selon la revendication 1, dans lequel l'appareil de traitement de signal est configuré

   - pour calculer une échelle de longueur locale $(l(x_i))$ à chaque point d'échantillonnage $(x_i)$ du signal d'entrée numérique $(6,l(x_i))$, et
   - pour calculer une estimation de ligne de base $(44,f(x_i,l(x_i)))$ basée sur l'échelle de longueur locale $(l(x_i))$ à chaque point d'échantillonnage $(x_i)$ du signal d'entrée numérique.

5. Appareil de traitement de signal (1) selon la revendication 1, dans lequel l'appareil de traitement de signal est configuré

   - pour calculer une autre estimation de ligne de base $(f(x_i,l(x_i)))$ à partir de la pluralité d'estimations de ligne de base $(f_n(x_i,l_n))$ qui sont basées sur les différentes échelles de longueur locales constantes $(l_n)$.

6. Appareil de traitement de signal (1) selon la revendication 1, dans lequel l'appareil de traitement de signal est configuré

   - pour supprimer chaque estimation de la pluralité d'estimations de ligne de base $(f_n(x_i,l_n))$ qui sont basées sur les différentes échelles de longueur locales constantes $(l_n)$ séparément du signal d'entrée numérique $(6,l(x_i))$ pour obtenir une pluralité de signaux de sortie intermédiaires $(J_n(x_i))$ ;
   - pour obtenir le signal de sortie numérique $(36,0(x_i))$ sur la base d'une combinaison de la pluralité de signaux de sortie intermédiaires.

7. Appareil de traitement de signal (1) selon la revendication 6, dans lequel l'appareil de traitement de signal est configuré

   - pour interpoler au moins deux signaux de sortie intermédiaires $(J_n(x_i))$ à chaque point d'échantillonnage $(x_i)$ afin de calculer le signal de sortie numérique $(36,0(x_i))$ à un point d'échantillonnage correspondant $(x_i)$.

8. Procédé de traitement de signal mis en œuvre par un ordinateur pour déflouter un signal d'entrée numérique $(6,l(x_i))$, le procédé de traitement de signal comprenant les étapes suivantes :

   - calcul d'une pluralité d'échelles de longueur locales $(l_k,l(x_i)$ sur la base d'au moins un paramètre parmi une corrélation d'anneau de Fourier $(FRC_k)$ et un rapport signal sur bruit local $(SNR_k)$, dans lequel, pour un rapport signal sur bruit plus grand, une échelle de longueur plus petite est sélectionnée que pour un rapport signal sur bruit plus petit, chaque échelle de longueur locale de la pluralité d'échelles de longueur locales étant calculée à un emplacement différent $(l_k,l(x_i))$ du signal d'entrée numérique, chaque emplacement différent comprenant au moins un point d'échantillonnage $(x_i)$ du signal d'entrée ;
   - détermination d'un ensemble de différentes échelles de longueur locales constantes $(l_n)$, sur la base de la pluralité d'échelles de longueur locales $(l_k,l(x_i))$, les échelles de longueur locales constantes $(l_n)$ ayant la même valeur à tous les points d'échantillonnage $(x_i)$ ;
   - calcul d'une pluralité d'estimations de ligne de base $(44,f_n(x_i,l_n))$ du signal d'entrée numérique $(6,l(x_i))$, sur la base chacune d'une échelle de longueur locale constante différente de l'ensemble de différentes échelles de longueur locales constantes $(l_n)$, dans lequel chaque estimation de ligne de base est calculée à l'aide d'un ajustement polynomial ou d'un ajustement par spline sur le signal d'entrée, dans lequel un critère de minimisation par les moindres carrés, qui doit être minimisé pour l'ajustement, est utilisé pour calculer chaque estimation de ligne de base, dans lequel ladite échelle de longueur locale constante différente est contenue dans un terme de pénalité du critère de minimisation par les moindres carrés, dans lequel le terme de pénalité comprend une dérivée de l'estimation de ligne de base respective ; et
   - calcul d'un signal de sortie numérique $(36,0(x_i))$ sur la base soit (a) de la pluralité d'estimations de ligne de base, soit (b) du signal d'entrée numérique et de la pluralité d'estimations de ligne de base.

9. Programme informatique avec un code de programme pour mettre en œuvre le procédé de traitement de signal selon la revendication 8, quand le programme informatique est exécuté sur un processeur.

**10.** Support non volatile lisible par un ordinateur sur lequel est stocké un programme informatique commandant à un ordinateur d'exécuter le procédé de traitement de signal selon la revendication 8.

**11.** Signal de sortie numérique **(36,0($x_i$))** qui est le résultat du procédé de traitement de signal selon la revendication 8.

FIG. 1

EP 3 716 199 B1

FIG. 3

FIG. 2

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 18194617

- EP 2019051863 W

**Non-patent literature cited in the description**

- **B. MCCLEARY.** *Color Component Cross-Talk Pixel SNR Correction Method for Color Imagers,* 2007
- **R. C. PUETTER ; A. YAHIL.** *The Pixon Method of Image Reconstruction,* 1999
- **KOHO, SAMI ; TORTAROLO, GIORGIO ; CASTELLO, MARCO ; DEGUCHI, TAKAHIRO ; DIASPRO, ALBERTO ; VICIDOMINI, GIUSEPPE.** *Fourier Ring Correlation Simplifies Image Restoration in Fluorescence Microscopy,* 2019

- **IDIER, J.** Convex Half-Quadratic Criteria and Interacting Variables for Image Restoration. *IEEE Transactions on Signal processing,* 2001, vol. 10 (7), 1001-1009
- **MAZET, V. ; CARTERET, C ; BIRE, D ; IDIER, J. ; HUMBERT, B.** Background Removal from Spectra by Designing and Minimizing a Non-Quadratic Cost Function,. *Chemometrics and Intelligent Laboratory Systems,* 2005, vol. 76, 121-133